# EUROPEAN PATENT APPLICATION

(11) **EP 4 521 240 A1**
(43) Date of publication of application: **12.03.2025**
(21) Application number: 23814768.0
(22) Date of filing: 08.04.2023
(51) Int. Cl.: G06F 9/455

(54) **CONTAINER CREATION METHOD AND APPARATUS, AND STORAGE MEDIUM**

(30) Priority: 02.06.2022 CN 202210622548
(71) Applicant: Huawei Technologies Co., Ltd., Shenzhen, Guangdong 518129 (CN)
(72) Inventor: FENG, Jieheng, Shenzhen, Guangdong 518129 (CN); CHEN, Chunming, Shenzhen, Guangdong 518129 (CN)
(74) Representative: MERH-IP Matias Erny Reichl Hoffmann Patentanwälte PartG mbB
(86) International application number: PCT/CN2023/087179
(87) International publication number: WO 2023/231572

(57) **Abstract**

This application discloses a method and an apparatus for creating a container, and a storage medium, and relates to the field of computer communication technologies. The method is performed by a first node in a container cluster, and the method includes: obtaining a first creation request that indicates to create a secure container; creating a first virtual machine based on the first creation request; and running the secure container in the first virtual machine, where a physical resource of a memory of the first virtual machine is a first physical storage space in a first storage node. **In** this way, when the secure container needs to be migrated from the first node to another node in the container cluster, only the first physical storage space needs to be used as a physical resource of a memory of a virtual machine for running the migrated secure container, so that the secure container can be migrated without affecting service continuity of the container and without losing service data of the container.

## Description

### TECHNICAL FIELD

This application relates to the field of computer communication technologies, and in particular, to a method and an apparatus for creating a container, and a storage medium.

### BACKGROUND

Kubernetes (K8S for short) is an open-source system for container orchestration, scheduling, and management, and is considered as an operating system in the cloud native era. A cluster implemented by using K8S may also be referred to as a K8S cluster. One K8S cluster includes several physical machines or virtual machines (virtual machines, VMs). One physical machine or one virtual machine may be considered as one node (node). K8S creates a container on the node in the cluster by using a pod as a minimum unit. One pod may include one or more containers. The container is generally configured to provide a running environment for an application process, in other words, configured to run an application instance.

Generally, a lifecycle of the pod is short. Therefore, the pod is frequently created, scheduled, and destroyed. After being scheduled to a node, the pod is always running on the node generally. Because the pod does not have a self-healing capability, when the node does not meet a survival requirement of the pod (for example, resources of the node are exhausted), the node deletes the pod. In addition, K8S newly creates a pod on another node to replace the deleted pod.

However, in a process in which K8S deletes the pod and newly creates the pod on the another node, the application instance running in the container in the pod is interrupted. This damages service continuity and causes loss of service data. Therefore, how to create a container whose service continuity is not affected and whose service data is not lost during migration is a technical problem to be urgently resolved currently.

### SUMMARY

This application provides a method and an apparatus for creating a container, and a storage medium. According to the method, a container can be migrated without affecting service continuity of the container and without losing service data of the container.

To achieve the foregoing objective, this application provides the following technical solutions.

According to a first aspect, this application provides a method for creating a container, where the method is applied to a first node. The method includes: obtaining a first creation request that indicates to create a target container; creating a first virtual machine based on the first creation request; and running the target container in the first virtual machine. The target container is a secure container, the first creation request includes a resource parameter of the first virtual machine in which the target container runs, and a physical resource of a memory of the first virtual machine is a first physical storage space in a first storage node.

In this way, when the secure container created based on the method provided in this application needs to be migrated from the first node to another node, only the first physical storage space needs to be used as a physical resource of a memory of a virtual machine for running the migrated secure container, so that the secure container can be migrated without affecting service continuity of the container and without losing service data of the container.

In a possible design manner, the first node accesses the first physical storage space via remote direct memory access RDMA.

In the possible design, the first virtual machine created in the first node may access the first physical storage space of the first storage node as the memory. In other words, an objective of using the first physical storage space as the memory of the first virtual machine is achieved.

In another possible design manner, the first physical storage space is a persistent memory medium.

In the possible design, storage performance of the persistent memory medium is between that of a conventional DRAM and that of a flash memory (for example, an NAND flash memory). Therefore, compared with the flash memory, the first physical storage space used as the memory of the first virtual machine has a higher access speed and a lower access delay. Compared with the conventional DRAM, the first physical storage space used as the memory of the first virtual machine has a larger storage capacity, data is not lost upon a power failure, the data can be persistently stored, and costs are low.

In another possible design manner, before the creating the first virtual machine based on the first creation request, the method further includes: determining a memory size of the first virtual machine based on the first creation request; and applying to the first storage node for the first physical storage space based on the memory size of the first virtual machine, and determining the first physical storage space as the physical resource of the memory of the first virtual machine. The first physical storage space is greater than or equal to the memory size of the first virtual machine.

In another possible design manner, the method further includes: determining a second physical storage space of a data processing unit DPU in the first node as a physical resource of a cache of the first virtual machine; and indicating the DPU to establish a mapping relationship between the second physical storage space and the first physical storage space. The DPU is configured to access the first physical storage space via the RDMA, and is configured to write data in the second physical storage space into the first physical storage space.

In the possible design, after the first node creates the first virtual machine, in the process in which the first virtual machine writes the data into the first physical storage space, for a process that is initiated by the first virtual machine on the first node to write the data into the first physical storage space, after the data is written into the second physical storage space of the DPU, the first virtual machine on the first node may determine that a data writing task of the process has been completed. Subsequently, as an independent unit in the first node, the DPU writes, through an RDMA operation, the data written into the second physical storage space into the first physical storage space.

In other words, the first virtual machine on the first node does not need to determine, after receiving a response packet that is of the RDMA operation and that is returned by the first storage node, that the data writing task of the process has been completed. In other words, the second physical storage space of the DPU is used as a cache for the first node to write the data into the first physical storage space. For the first node, when it is determined that the data has been written into the second physical storage space, it is determined that the data has been written into the first physical storage space. In this way, a related process resource that is in the first node and that is used to write the data can be quickly released, thereby saving a resource required by the first node to run a process used to write the data.

In another possible design manner, the DPU is further configured to read hot data of the target container from the first physical storage space.

In this way, in the possible design, the DPU pre-reads, from the first physical storage space, data (namely, the hot data) that is accessed by an application process in the target container for a large quantity of times in a recent period of time to the second physical storage space, and when the application process in the target container accesses these hot data again, the DPU may directly return these data to the application process. This improves data access efficiency of the application process.

In another possible design manner, the first node is any node in a container cluster, and the container cluster further includes a second node; and when the target container is migrated to the second node, a physical resource of a memory of a second virtual machine in which the target container runs and that is on the second node is the first physical storage space.

In the possible design, when the target container is migrated to the second node, and the first physical storage space is used as the physical resource of the memory of the second virtual machine on the second node, the secure container can be migrated without affecting the service continuity of the container and without losing the service data of the container.

In another possible design manner, the first node is any node in a container cluster, the container cluster further includes a third node, the third node is configured to create a backup container of the target container, a third virtual machine in which the backup container runs and that is on the third node is in a pause state, and a physical resource of a memory of the third virtual machine is the first physical storage space.

In another possible design manner, when the first virtual machine is in a fault state or in a pause state, the third virtual machine is in a running state.

In the possible design, an objective of migrating the target container from the first node to the third node is achieved. In addition, because the first physical storage space is used as the physical resource of the memory of the third virtual machine for running the migrated secure container, the secure container is migrated without affecting the service continuity of the container and without losing the service data of the container.

In another possible design manner, the method further includes: after the target container is migrated to another node in the container cluster, updating network routing information for accessing the target container.

In another possible design manner, the method further includes: sending a routing update message to the another node other than the first node in the container cluster after the target container is migrated to the another node in the container cluster, to enable the another node to update the network routing information for accessing the target container.

In the foregoing two possible design manners, an objective that user equipment subsequently normally accesses the target container can be achieved, and a user is unaware of the process of migrating the target container.

According to a second aspect, this application provides an apparatus for creating a container.

In a possible design manner, the creation apparatus is configured to perform any method provided in the first aspect. In this application, the creation apparatus may be divided into functional modules based on the any method provided in the first aspect. For example, each functional module may be obtained through division based on each corresponding function, or two or more functions may be integrated into one processing module. For example, in this application, the creation apparatus may be divided into an obtaining unit and a processing unit based on functions. For descriptions of possible technical solutions performed by the foregoing functional modules obtained through division and beneficial effects, refer to the technical solutions provided in the first aspect or the possible designs corresponding to the first aspect. Details are not described herein again.

In another possible design, the creation apparatus includes a memory, a network interface, and one or more processors. The one or more processors receive or send data through the network interface. The one or more processors are configured to read program instructions stored in the memory, to enable the creation apparatus to perform the method provided in any one of the first aspect and the possible design manners of the first aspect.

According to a third aspect, this application provides a method for creating a container, where the method is applied to a second node. The method includes: receiving a container migration request, where the container migration request indicates to migrate a target container that runs in a first virtual machine on a first node to the second node, and indicates the second node to create a second virtual machine for running the target container, where the target container is a secure container; determining a first physical storage space in a first storage node as a physical resource of a memory of the second virtual machine, where the first physical storage space is a physical resource of a memory of the first virtual machine; creating the second virtual machine based on the physical resource of the memory of the second virtual machine; and running the target container in the second virtual machine.

Based on the method provided in this application, a physical resource of a memory of the target container before and after the migration is the same. In this way, memory data of the target container that runs in the second virtual machine on the second node after the migration is memory data of the target container that runs in the first virtual machine on the first node before the migration. Therefore, when the memory data of the target container before and after the migration is the same, it indicates that a service status of the target container before and after the migration is the same. In other words, according to the method in this application, service continuity of the container is not affected and service data of the container is not lost when the container is migrated.

In another possible design, the container migration request includes an identity ID of the target container, and the determining a first physical storage space in a first storage node as a physical resource of a memory of the second virtual machine includes: sending a memory request message including the ID of the target container to the first storage node, where the memory request message is used to request to obtain an address of the first physical storage space that has a correspondence with the ID of the target container; receiving the address of the first physical storage space that is returned by the first storage node; and determining the first physical storage space indicated by the address as the physical resource of the memory of the second virtual machine.

The possible design is an implementation in which the second node obtains the address of the first physical storage space (namely, the physical resource of the memory of the first virtual machine), to use the first physical storage space as the physical resource of the memory of the second virtual machine.

In another possible design, the container migration request includes an identity ID of the first virtual machine, and the determining a first physical storage space in a first storage node as a physical resource of a memory of the second virtual machine includes: sending a memory request message including the ID of the first virtual machine to the first storage node, where the memory request message is used to request to obtain an address of the first physical storage space that has a correspondence with the ID of the first virtual machine; receiving the address of the first physical storage space that is returned by the first storage node; and determining the first physical storage space indicated by the address as the physical resource of the memory of the second virtual machine.

The possible design is another implementation in which the second node obtains the address of the first physical storage space (namely, the physical resource of the memory of the first virtual machine), to use the first physical storage space as the physical resource of the memory of the second virtual machine.

According to a fourth aspect, this application provides an apparatus for creating a container.

In a possible design manner, the creation apparatus is configured to perform any method provided in the third aspect. In this application, the creation apparatus may be divided into functional modules based on the any method provided in the third aspect. For example, each functional module may be obtained through division based on each corresponding function, or two or more functions may be integrated into one processing module. For example, in this application, the creation apparatus may be divided into a receiving unit and a processing unit based on functions. For descriptions of possible technical solutions performed by the foregoing functional modules obtained through division and beneficial effects, refer to the technical solutions provided in the third aspect or the possible designs corresponding to the third aspect. Details are not described herein again.

In another possible design, the creation apparatus includes a memory, a network interface, and one or more processors. The one or more processors receive or send data through the network interface. The one or more processors are configured to read program instructions stored in the memory, to enable the creation apparatus to perform the method provided in any one of the third aspect and the possible design manners of the third aspect.

According to a fifth aspect, this application provides a container cluster, where the container cluster includes a first node and a second node. The first node is configured to perform the method provided in any one of the first aspect and the possible design manners of the first aspect, to create a target container. The second node is configured to perform the method provided in any one of the third aspect and the possible design manners of the third aspect, to migrate the target container running on the first node to the second node.

According to a sixth aspect, this application provides a computer-readable storage medium. The computer-readable storage medium includes program instructions. When the program instructions are run on a computer or a processor, the computer or the processor is enabled to perform any method provided in any possible implementation of the first aspect or the second aspect.

According to a seventh aspect, this application provides a computer program product. When the computer program product runs on an apparatus for creating a container, any method provided in any possible implementation of the first aspect is performed.

According to an eighth aspect, this application provides a chip system, including a processor. The processor is configured to invoke, from a memory, a computer program stored in the memory, and run the computer program, to perform any method provided in the implementations of the first aspect.

It may be understood that, any one of the apparatus, the computer storage medium, the computer program product, the chip system, or the like provided above may be used in the corresponding method provided above. Therefore, for beneficial effects that can be achieved by any one of the apparatus, the computer storage medium, the computer program product, the chip system, or the like, refer to the beneficial effects of the corresponding method. Details are not described herein.

In this application, a name of the apparatus for creating a container does not impose any limitation on devices or functional modules. During actual implementation, these devices or functional modules may have other names. Each device or functional module falls within the scope defined by the claims and their equivalent technologies in this application, provided that a function of the device or functional module is similar to that described in this application.

### BRIEF DESCRIPTION OF DRAWINGS

FIG. 1 is a schematic diagram of an architecture of a container cluster according to an embodiment of this application;
FIG. 2 is a schematic diagram of a hardware structure of a first node according to an embodiment of this application;
FIG. 3 is a schematic flowchart of a method for creating a container according to an embodiment of this application;
FIG. 4 is a schematic diagram of a data read/write procedure when a target container processes a service according to an embodiment of this application;
FIG. 5 is a schematic flowchart of another method for creating a container according to an embodiment of this application;
FIG. 6 is a schematic diagram of a shared memory according to an embodiment of this application;
FIG. 7 is a schematic flowchart of still another method for creating a container according to an embodiment of this application;
FIG. 8 is a schematic diagram of another data read/write procedure when a target container processes a service according to an embodiment of this application;
FIG. 9 is a schematic flowchart of still another method for creating a container according to an embodiment of this application;
FIG. 10 is a schematic flowchart of still another method for creating a container according to an embodiment of this application;
FIG. 11 is a schematic diagram of a structure of an apparatus for creating a container according to an embodiment of this application;
FIG. 12 is a schematic diagram of a structure of another apparatus for creating a container according to an embodiment of this application; and
FIG. 13 is a schematic diagram of a chip system according to an embodiment of this application.

### DESCRIPTION OF EMBODIMENTS

To better understand embodiments of this application, the following describes some terms or technologies used in embodiments of this application.

### (1) Container

The container may be configured to provide a running environment for an application process, or may be understood as being configured to run an application instance.

Generally, the container may be classified into a common container and a secure container. The common container may directly run in a node, and the secure container runs in a virtual machine created on a node in a cluster.

Compared with the common container, the secure container running in the virtual machine has higher security.

This is because the virtual machine for running the container is usually for running of only the container, and the type of virtual machine is generally referred to as a lightweight virtual machine. Similar to a common virtual machine, the lightweight virtual machine is configured with an independent operating system kernel, and is isolated at a virtualization layer in a secure manner. In other words, a container running in the lightweight virtual machine does not share an operating system kernel of a donor node (namely, a node (including a physical node and a virtual node) that is configured to run the lightweight virtual machine). Therefore, the secure container is more secure than the common container.

In addition, because the lightweight virtual machine is for running of only the container, the lightweight virtual machine only needs to be configured with a functional module that supports running of the secure container. In other words, the lightweight virtual machine starts and runs faster than the common virtual machine.

### (2) Other terms

In embodiments of this application, the terms "first" and "second" do not represent a sequence relationship, but are intended to distinguish between different objects. The terms "first", "second", and the like mentioned in the following documents are also intended to distinguish between different packets, and cannot be understood as indicating or implying relative importance or implicitly indicating a quantity of indicated technical features.

It should further be understood that, in embodiments of this application, sequence numbers of the processes do not mean execution sequences. The execution sequences of the processes should be determined based on functions and internal logic of the processes, and should not be construed as any limitation on implementation processes of embodiments of this application.

In practice, for the secure container, when the secure container needs to be migrated, the secure container may be migrated by migrating the virtual machine for running the secure container.

In a possible implementation, two same virtual machines may be simultaneously created on two nodes, one virtual machine is used as a primary virtual machine, and the other virtual machine is used as a standby virtual machine. The primary virtual machine normally processes a service submitted by a user, and transfers the service submitted by the user to the standby virtual machine. In this way, the standby virtual machine processes the service submitted by the user, so that the standby virtual machine can obtain a processing result the same as a processing result of the primary virtual machine. When determining that the standby virtual machine has completed processing of the user service, the primary virtual machine outputs, to the user, the processing result obtained through processing of the user service by the primary virtual machine. All external outputs of the standby virtual machine are shielded, in other words, the standby virtual machine does not externally output the processing result obtained by the standby virtual machine. When the primary virtual machine fails or is faulty, a node on which the primary virtual machine runs only needs to notify a node on which the standby virtual machine runs to cancel output shielding of the standby virtual machine, to implement instant switching between the primary virtual machine and the standby virtual machine. This achieves an objective of migrating the virtual machine without service interrupting, and further achieves an objective of migrating the secure container running in the virtual machine.

However, when the container in the virtual machine is migrated in this manner, the primary virtual machine outputs the processing result of the service to the user only after application instances running in containers in the primary virtual machine and the standby virtual machine complete processing of the user service. This causes a response delay of the user plane service, and reduces user experience.

On this basis, embodiments of this application provide a method for creating a container. In the method, a physical resource of a memory of a first virtual machine that is created when a secure container is created is set to a first physical storage space in a first storage node. In this way, when the secure container created based on the method is migrated, only a physical resource of a memory of a second virtual machine for running the migrated secure container needs to be also set as the first physical storage space. In other words, the first physical storage space is used as a shared memory of the virtual machine for running the secure container before and after the migration. In this manner, the secure container can be migrated without losing service data, without interrupting a user service, and without being aware of by a user.

Embodiments of this application further provide a container cluster. The container cluster may include a control node and a plurality of nodes (or referred to as worker nodes (worker nodes)) configured to deploy containers. The control node is configured to manage containers running on the plurality of worker nodes, for example, is configured to indicate the worker node to create the container, or monitor a running state of the container on the worker node. Optionally, to implement disaster recovery and backup, there may be a plurality of control nodes.

Optionally, the foregoing plurality of worker nodes may be physical nodes, or may be virtual nodes. This is not limited herein. The control node may be any node device having a computing processing capability, and the node device may be a physical node, or may be a virtual node. This is not limited herein. The physical node may be, for example, a computing device such as a general-purpose computer or a notebook computer, and the virtual node may be, for example, a virtual machine. This is not limited thereto.

It may be understood that, the control node may be an independent node device. Certainly, a function of the control node may also be implemented by any worker node of the plurality of worker nodes. In other words, the control node is a functional module in the any worker node. This is not limited herein. For ease of descriptions, the following describes embodiments of this application by using an example in which the control node is the independent node device.

Optionally, the container cluster may further include one or more storage nodes.

The one or more storage nodes in the container cluster provided in embodiments of this application may be configured to provide a shared memory for the worker node that is in the container cluster and in which a secure container is deployed. The shared memory is, for example, a memory unit including a plurality of persistent memory media (such as an XL-Flash). Storage performance of the persistent memory medium is between that of a conventional dynamic random access memory (dynamic random access memory, DRAM) and that of a flash memory (flash memory) (for example, an NAND flash memory). Therefore, compared with the flash memory, the shared memory has a higher access speed and a lower access delay. Compared with the conventional DRAM, the shared memory has a larger storage capacity, data is not lost upon a power failure, the data can be persistently stored, and costs are low.

Optionally, the one or more storage nodes in the container cluster provided in embodiments of this application may be further configured to provide a storage space for an image file of the container that runs on the worker node in the container cluster. The storage space is, for example, a storage unit including a plurality of non-volatile storage media, such as a mechanical hard disk, or a solid-state disk. Storage performance of the storage space is weaker than the storage performance of the persistent memory medium, but a capacity is larger and costs are lower. The image file (or referred to as a container image (container image)) of the container stores program code of the container, and is used to store data, of the container, that needs to be persistently stored, and the like. Details are not described.

It should be noted that, the storage node that provides the shared memory for the node that is in the container cluster and in which the secure container is deployed and the storage node that provides the storage space for the image file of the container that is run by the node in the container cluster may be an identical storage node in the container cluster, or certainly may be different storage nodes in the container cluster. This is not limited herein.

Certainly, the container cluster in embodiments of this application may alternatively not include the storage node. In this case, a storage node in an independent storage system may be configured to provide a data storage service for the container cluster. For example, the storage node in the storage system may be configured to provide a storage service of the shared memory for the node that is in the container cluster and in which the secure container is deployed, and/or configured to provide the storage space for the image file of the container that runs on the node in the container cluster. This is not limited herein.

For ease of descriptions, in embodiments of this application, descriptions are provided below by using an example in which the container cluster provided in embodiments of this application includes one or more storage nodes.

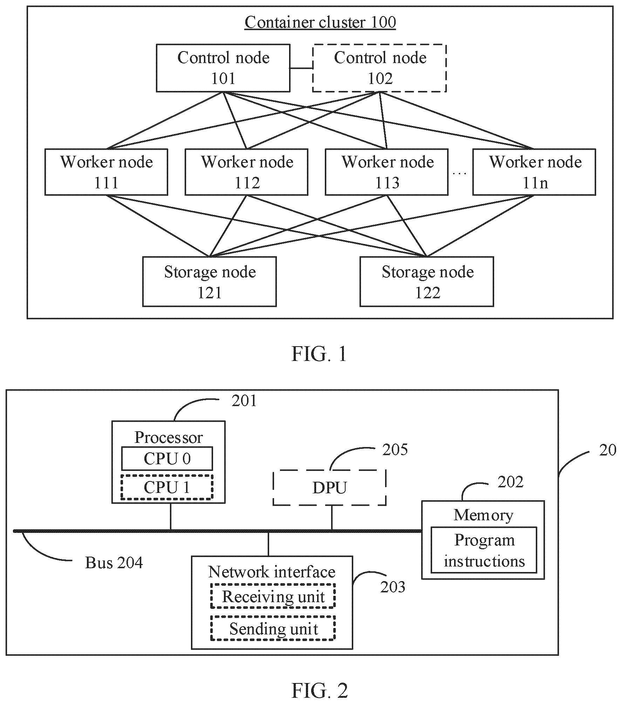

In an example, FIG. 1 is a schematic diagram of an architecture of a container cluster 100 according to an embodiment of this application.

As shown in FIG. 1, a container cluster 100 includes a control node 101, a control node 102, and n worker nodes configured to deploy containers. The n worker nodes are respectively a worker node 111, a worker node 112, a worker node 113, ..., and a worker node 11n. n is an integer greater than 3. The control node 102 is a backup control node of the control node 101.

The container cluster 100 further includes two storage nodes: a storage node 121 and a storage node 122 respectively. The storage node 121 and the storage node 122 may have communication connections to the n worker nodes respectively. In this way, the n worker nodes may access the storage node 121 and the storage node 122 via remote direct memory access (remote direct memory access, RDMA). A storage node that provides a shared memory for a worker node in which a secure container is deployed and that is in the container cluster 100 and a storage node that provides a storage space for an image file of a container that runs in the n worker nodes may be both the storage node 121, or may be both the storage node 122, or may be the storage node 121 and the storage node 122 respectively.

It may be understood that, although not shown in FIG. 1, there may also be a communication connection between the control node 101, the control node 102, and the storage node 121 (and/or the storage node 122), so that the control node 101 and the control node 102 may access the storage node 121 (and/or the storage node 122).

It should also be understood that, although not shown in FIG. 1, the worker node 111, the worker node 112, the worker node 113, ..., and the worker node 11n may communicate with each other.

Embodiments of this application further provide an apparatus for creating a container. The apparatus is used in the foregoing container cluster. Optionally, the apparatus may be any worker node (referred to as a first node below) that is in the container cluster and that is configured to deploy a container, or the apparatus is a functional module in the first node. This is not limited herein. In an example, the first node may be a worker node 111, a worker node 112, a worker node 113, or the like in the container cluster 100 shown in FIG. 1. This is not limited herein.

An example in which the apparatus for creating a container provided in embodiments of this application is a first node in a container cluster is used. FIG. 2 is a schematic diagram of a hardware structure of a first node. As shown in FIG. 2, a first node 20 includes a processor 201, a memory 202, a network interface 203, and a bus 204. The processor 201, the memory 202, and the network interface 203 are connected through the bus 204.

The processor 201 is a control center of the first node 20, and may be a general-purpose central processing unit (central processing unit, CPU). Alternatively, the processor 201 may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, a graphics processing unit (graphics processing unit, GPU), a neural network processing unit (neural processing unit, NPU), a tensor processing unit (tensor processing unit, TPU) or an artificial intelligence (artificial intelligent) chip, a data processing unit (data processing unit, DPU), or the like.

In an example, the processor 201 includes one or more CPUs, for example, a CPU 0 and a CPU 1 that are shown in FIG. 2. In addition, a quantity of cores of the processor in each processor is not limited in this application.

The memory 202 is configured to store program instructions or data to be accessed by an application process. The processor 201 may execute the program instructions in the memory 202, to implement the method for creating a container provided in embodiments of this application.

The memory 202 includes a volatile memory or a non-volatile memory, or may include both a volatile memory and a non-volatile memory.

The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a DRAM, a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The non-volatile memory may be a storage class memory (storage class memory, SCM), a solid-state drive (solid-state drive, SSD), a mechanical hard disk drive (hard disk drive, HDD), or the like. The storage class memory may be, for example, a non-volatile memory (non-volatile memory, NVM), a phase-change memory (phase-change memory, PCM), or a persistent memory.

In a possible implementation, the memory 202 is independent of the processor 201. The memory 202 is connected to the processor 201 through the bus 204, and is configured to store data, instructions, or program code. When invoking and executing the instructions or the program code stored in the memory 202, the processor 201 can implement the method for creating a container provided in embodiments of this application.

In another possible implementation, the memory 202 is integrated with the processor 201.

The network interface 203 is configured to connect the first node 20 to another device (for example, the storage node in the container cluster 100 shown in FIG. 1) via a communication network. The communication network may be an Ethernet, a radio access network (radio access network, RAN), a wireless local area network (wireless local area network, WLAN), or the like. The network interface 203 includes a receiving unit configured to receive data/packets and a sending unit configured to send data/packets.

In embodiments of this application, the network interface 203 may be an RDMA-supporting network interface card (network interface card, NIC), and the RDMA-supporting NIC may be briefly referred to as an RNIC.

The RDMA is a transport layer network protocol used to resolve a data processing delay in network transmission. The RDMA can reduce a data replication operation performed in a host device used to transmit data in a data transmission process, and an operating system of the host device used to perform data transmission does not need to intervene. Therefore, the RDMA can reduce CPU load of the host device used to perform data transmission.

The bus 204 may be an industry standard architecture (industry standard architecture, ISA) bus, a peripheral component interconnect (peripheral component interconnect, PCI) bus, a high-speed serial computer extension bus (peripheral component interconnect express, PCIe), a compute express link (compute express link, CXL), an extended industry standard architecture (extended industry standard architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

In some embodiments, optionally, an independent DPU 205 may be further configured for the first node 20. The DPU 205 communicates with the processor 201, the memory 202, and the network interface 203 through the bus 204.

The DPU 205 includes a storage module and an RNIC driver module. Optionally, hardware implementation of the DPU 205 may be an ASIC, an FPGA, or another programmable logic device, a discrete gate or a transistor logic device, a discrete hardware component, or the like that can implement a storage function and an RNIC function. This is not specifically limited in embodiments of this application. It may be understood that, in practice, the DPU 205 may be presented as a circuit board/card having the storage function and the RNIC function.

The storage module of the DPU 205 may include the DRAM.

Optionally, a physical storage space in the storage module may be used as a cache of a virtual machine running on the first node 20, and supports memory access semantics and a direct access (Direct Access, DAX) access mechanism. In this way, the storage module of the DPU 205 may be presented on the first node 20 as a persistent storage device supporting the DAX. The DAX access mechanism is a mechanism that supports directly accessing, by user-mode software, data stored in the persistent memory. In this way, when accessing the data in the storage module of the DPU 205, it is equivalent to that the first node 20 accesses a memory of the first node 20, and does not need to first perform a process of copying the data to a page cache (page cache) of the operating system.

The RNIC driver module of the DPU 205 is configured to communicate with a storage node (for example, the storage node 121 or the storage node 122 in FIG. 1), and access, via the RDMA, a physical storage space that is used as a shared memory and that is in the storage node.

It should be noted that, when the DPU 205 is configured for the first node 20, the network interface 203 may support the RDMA, or may not support the RDMA. This is not limited in embodiments of this application.

It should be noted that, the structure shown in FIG. 2 does not constitute a limitation on the first node 20. In addition to the components shown in FIG. 2, the first node 20 may further include more or fewer components than those shown in FIG. 2, combine some components, or have different component arrangements.

With reference to the accompanying drawings, the following describes the method for creating a container provided in embodiments of this application.

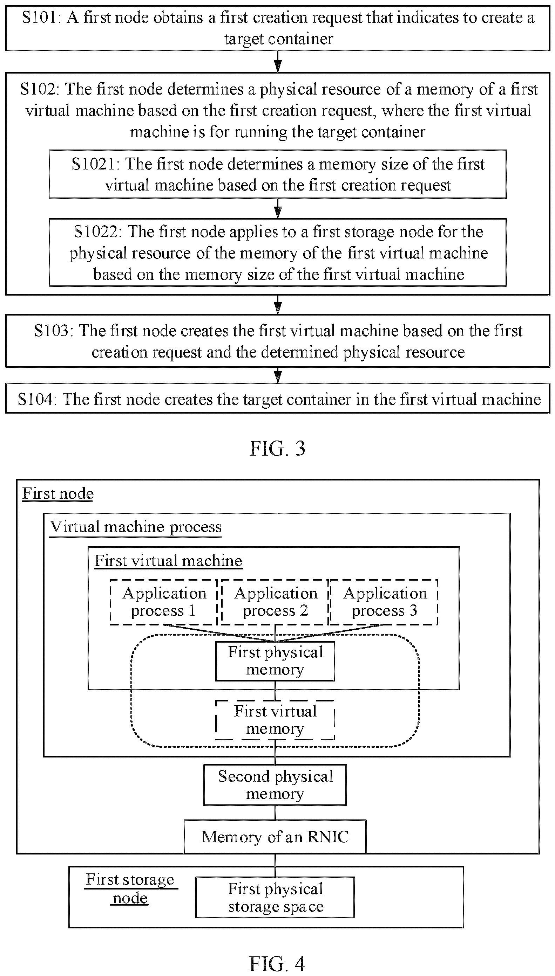

In a first possible implementation, FIG. 3 is a schematic flowchart of a method for creating a container according to an embodiment of this application. Optionally, the method is applied to the container cluster 100 shown in FIG. 1, and may be performed by a first node having the hardware structure shown in FIG. 2. The method may include the following steps.

S101: A first node obtains a first creation request that indicates to create a target container.

The target container is a secure container. For descriptions of the secure container, refer to the foregoing descriptions. Details are not described herein again.

Optionally, in specific implementation, the first creation request may carry first indication information, and the first indication information indicates the first node to create the target container supporting a dynamic migration feature.

It may be understood that, the target container supporting the dynamic migration feature is a container created by the first node based on the method in embodiments of this application. The supporting the dynamic migration feature refers to a feature of completing migration of a container that runs normally without interrupting a service.

Specifically, the first creation request further indicates the first node to create a lightweight virtual machine for running the target container (Descriptions are provided below by using an example in which the lightweight virtual machine is a first virtual machine), and indicates the first node to run the target container in the first virtual machine whose creation is completed.

The first creation request includes an identity (Identification document, ID) of the target container (or an ID of a pod to which the target container belongs), an image ID of the target container, and a resource parameter including a resource required for running the target container. The resource parameter includes a size of a CPU resource, a size of a memory resource, and the like that are required for running the target container.

The image ID of the target container identifies an image file of the target container, and the first node may access the image file of the target container based on the image ID of the target container.

Optionally, the image file of the target container is prestored in a second storage node. The second storage node and the first storage node described above may be an identical storage node, or may be different storage nodes. This is not limited herein. The second storage node prestores image files of one or more containers. The image file of the container stores program code of the container, and is used to store data, of the container, that needs to be persistently stored, and the like. Details are not described. It may be understood that, the program code that is of the container and that is prestored in the second storage node may be program code that is of the container and that is designed and developed in advance by a designer, and image files of containers including different program code may be identified by different IDs. This is not limited herein.

Optionally, the first creation request may further include an ID of the first virtual machine. It may be understood that, the ID of the first virtual machine may also be an ID that is of the first virtual machine for running the target container and that is generated by the first node based on the ID of the target container or the ID of the pod to which the target container belongs in the first creation request. This is not limited herein. There is a correspondence between the ID of the target container (or the ID of the pod to which the target container belongs) and the ID of the first virtual machine.

In a possible implementation, the first node may receive the first creation request sent by a control node (for example, the control node 10 shown in FIG. 1) in the container cluster.

In specific implementation, an example in which the container cluster 100 shown in FIG. 1 is a K8S cluster in which a K8S system is installed is used. In this case, a K8S container management module is installed in each of the control node 10 and n worker nodes in the container cluster 100. The K8S container management module of the control node 10 may generate the first creation request based on an indication input by a user.

For example, the K8S container management module in the control node 10 may receive, through an input interface (for example, a keyboard, a mouse, or a touchscreen) of the control node 10, the indication entered by the user, to generate the first creation request, where the indication entered by the user includes, for example, the ID of the target container, and the image ID of the target container. It may be understood that, the ID of the container may be, for example, a name or a number of the container. This is not limited herein. The image ID may be, for example, a name or a number of the image file of the container. This is not limited herein.

Then, the control node 10 determines, according to a predetermined selection policy or based on the received indication of the user, that a node configured to deploy the target container is the first node in the container cluster 100, and sends the generated first creation request to the first node. In response, the first node may receive the first creation request. The predetermined selection policy is not limited in embodiments of this application. The predetermined selection policy may be, for example, a load balancing policy.

In another possible implementation, the first node may generate the first creation request based on an indication entered by a user. For example, the first node may receive, through an input interface (for example, a keyboard, a mouse, or a touchscreen), the indication entered by the user, and generate the first creation request. This is not specifically limited in embodiments of this application.

S102: The first node determines a physical resource of a memory of the first virtual machine based on the first creation request. The first virtual machine is for running of the target container.

Specifically, a process in which the first node determines the physical resource of the memory of the first virtual machine based on the first creation request may be implemented through step S1021 and step S1022.

S1021: The first node determines a memory size of the first virtual machine based on the first creation request.

The target container is the secure container, and a virtual machine running the secure container is generally a lightweight virtual machine for running only the secure container. It may be understood that, if the first creation request indicates to create only one target container, a resource required for running the target container may be considered as a resource required for creating the first virtual machine. If the first creation request indicates to create a plurality of containers including the target container, resources required for running the plurality of containers may be considered as resources required for creating the first virtual machine. In this case, the first creation request includes resource parameters of the resources required for running the plurality of containers, and the resources required for running the plurality of containers include the resource required for running the target container.

An example in which the first creation request indicates to create only one target container is used. The first node may determine, based on a resource parameter that is of the resource required for running the target container and that is included in the first creation request, a resource parameter of the resource required for creating the first virtual machine. For example, the first node determines, based on the resource parameter that is of the resource required for running the target container and that is included in the first creation request, a size of a CPU resource, a memory size, and the like that are required for creating the first virtual machine.

It should be understood that, the memory of the first virtual machine may be understood as a physical memory of the first virtual machine, and the physical memory of the first virtual machine is actually a segment of a virtual memory of a virtual machine process.

S 1022: The first node applies to the first storage node for the physical resource of the memory of the first virtual machine based on the memory size of the first virtual machine.

Specifically, the first node may apply to the first storage node for a segment of a physical storage space based on the memory size of the first virtual machine, to use the segment of the physical storage space as the physical resource of the memory of the first virtual machine.

Optionally, the first node may generate a first memory request message based on the memory size of the first virtual machine, and send the first memory request message to the first storage node.

For example, the first node may send the first memory request message to the first storage node through a network interface of the first node (for example, the network interface 203 shown in FIG. 2). The first memory request message indicates the first storage node to allocate the segment of the physical storage space to the first virtual machine. The first memory request message carries the memory size of the first virtual machine, and the first memory request message may further carry the ID of the target container (or the ID of the pod to which the target container belongs) and/or the ID of the first virtual machine. For descriptions of the ID of the first virtual machine, refer to the foregoing descriptions. Details are not described again. The first storage node may be a storage node (for example, the storage node 121 shown in FIG. 1) in the container cluster in which the first node is located, or may be a storage node in an independent storage system that can be accessed by the container cluster. This is not limited herein.

In response to the received first memory request message, the first storage node allocates the segment of the physical storage space to the first virtual machine, and returns an address (a physical address or a logical address) of the "segment of the physical storage space" to the first node.

For ease of descriptions, in embodiments of this application, the "segment of the physical storage space" allocated by the first storage node to the first virtual machine is referred to as a first physical storage space. Optionally, the first physical storage space may be a memory unit including a plurality of persistent memory media (such as an XL-Flash). Because storage performance of the persistent memory medium is between that of a conventional DRAM and that of a flash memory, compared with the flash memory, the first physical storage space has a higher access speed and a lower access delay. Compared with the conventional DRAM, the first physical storage space has a larger storage capacity, data is not lost upon a power failure, the data can be persistently stored, and costs are low.

Optionally, a size of the first physical storage space allocated by the first storage node to the first virtual machine may be equal to the memory size of the first virtual machine, or may be greater than the memory size of the first virtual machine. This is not limited herein.

Optionally, the first storage node may randomly allocate, to the first virtual machine, a segment of a physical storage space that is currently idle in a memory of the first storage node and that is greater than or equal to the memory size of the first virtual machine as the first physical storage space. Alternatively, the first storage node may allocate, to the first virtual machine according to a preset rule, a segment of a physical storage space that is currently idle in a memory of the first storage node and that is greater than or equal to the memory size of the first virtual machine as the first physical storage space. The preset rule is not limited in embodiments of this application.

Optionally, to facilitate management of a local storage space, after allocating the first physical storage space to the first virtual machine, the first storage node further establishes a correspondence between an address of the first physical storage space and the ID of the first virtual machine when the first memory request message carries the ID of the first virtual machine. Alternatively, when the first memory request message carries the ID of the target container (or the ID of the pod to which the target container belongs), the first storage node establishes a correspondence between the address of the first physical storage space and the ID of the target container (or the ID of the pod to which the target container belongs). Alternatively, when the first memory request message carries the ID of the target container (or the ID of the pod to which the target container belongs) and the ID of the first virtual machine, the first storage node establishes a correspondence between the address of the first physical storage space, the ID of the target container (or the ID of the pod to which the target container belongs), and the ID of the first virtual machine.

In response to the address of the first physical storage space that is returned by the first storage node to the first node, the first node obtains the address of the first physical storage space, to complete the process of applying to the first storage node for the physical resource of the memory of the first virtual machine.

It should be noted that, the first node may access the first physical storage space of the first storage node through an RDMA operation.

In some examples, the first node may register with a new DAX storage device based on the address of the first physical storage space that is returned by the first storage node.

The DAX storage device is a virtual storage device, the DAX storage device has no actual physical storage space on the first node, and the DAX storage device indicates a storage space corresponding to the address of the first physical storage space that is returned by the first storage node. For related descriptions of the DAX, refer to the foregoing descriptions. Details are not described herein again.

In some embodiments, the first physical storage space is used as the physical resource of the memory of the first virtual machine. In addition, a part of the first physical storage space may be further used to store CPU status information of the first virtual machine.

In this case, the size of the first physical storage space is at least equal to a sum of the memory size of the first virtual machine and an amount of the CPU status information of the first virtual machine. The CPU status information includes register information (for example, an identifier and a current value of a register), interrupt information, and the like. This is not limited herein. In this case, the first physical storage space includes a first space and a second space. The first space is used to store memory data of the first virtual machine, and the second space is used to store the CPU status information of the first virtual machine.

S103: The first node creates the first virtual machine based on the first creation request and the determined physical resource.

Specifically, the first node may first create, based on the first creation request, a virtual machine process used to create the first virtual machine. It may be understood that, the virtual machine process is used to create (or manage/monitor) the first virtual machine. In other words, the first virtual machine is equivalent to one or more threads through the virtual machine process.

In an example, the container cluster 100 shown in FIG. 1 is the K8S cluster in which the K8S system is installed. After the first node in the container cluster 100 obtains the first creation request, the K8S container management module in the first node sends the first creation request to a virtual machine monitor (virtual machine monitor, VMM) of the first node, and the VMM indicates the first node to create the virtual machine process used to create the first virtual machine.

In this way, based on the determined resource parameter of the resource required for creating the first virtual machine, the first node may create the first virtual machine in the created virtual machine process.

Specifically, based on the memory size of the first virtual machine, the first node may first address a segment of a virtual memory through the virtual machine process, to use the segment of the virtual memory as the physical memory (referred to as a first physical memory below) of the first virtual machine. Then, the first node establishes a mapping relationship between the first physical memory and the first physical storage space in the virtual machine process, to use the first physical storage space as the physical resource of the memory of the first virtual machine.

The first node may establish a mapping relationship between the first physical memory and a first virtual memory of the virtual machine process through the virtual machine process. The first virtual memory is a segment of a memory in a virtual memory of the virtual machine process, and an address of the first virtual memory is in one-to-one correspondence with an address of the first physical memory. The first node further establishes, through the virtual machine process, a mapping relationship between the first virtual memory and the first physical storage space returned by the first storage node, to achieve an objective of using the first physical storage space as the physical resource of the memory of the first virtual machine.

A size of the first virtual memory (or the first physical memory) is less than or equal to the size of the first physical storage space, and the first physical storage space includes an address that is in one-to-one correspondence with the address of the first virtual memory (or the first physical memory). In other words, an address of a segment of the first physical storage space or the entire first physical storage space is in one-to-one correspondence with the address of the first virtual memory (or the first physical memory).

In an example, when the first node establishes the mapping relationship between the first virtual memory and the first physical storage space in the virtual machine process, the first node may open the DAX storage device registered with by the first node based on the address of the first physical storage space, and establish the mapping relationship between the first virtual memory and the first physical storage space by invoking an mmap interface through the virtual machine process.

In addition, the first node further applies, based on the determined size of the CPU resource required by the first virtual machine, for the CPU resource of the first node for the first virtual machine through the virtual machine process. Details are not described herein.

In this way, after determining the physical resource of the memory of the first virtual machine and the CPU resource of the first virtual machine, the first node may create the first virtual machine through the virtual machine process. For example, the first node may read operating system code of the virtual machine from a locally prestored image file of the virtual machine, and run the operating system code in the determined resource through the virtual machine process, to complete creation of the first virtual machine. The operating system code in the image file of the virtual machine is the operating system code of the virtual machine.

It should be noted that, in embodiments of this application, the worker node in the container cluster prestores the image file of the virtual machine. The image file of the virtual machine includes the operating system code of the virtual machine, and the image file of the virtual machine may be used to store data that needs to be persistently stored in a running process of the virtual machine. It may be understood that, the image file of the virtual machine may be considered as a hard disk of the virtual machine.

It should be further noted that, after the first virtual machine is created, the first node may write the CPU status information of the first virtual machine into the second space in the first physical storage space through the virtual machine process. For descriptions of the second space and the CPU status information, refer to related descriptions in S1022. Details are not described herein again.

Specifically, the first node may first write, through the virtual machine process, the CPU status information of the first virtual machine into the first virtual memory. Because an actual physical storage space corresponding to the first virtual memory is a second physical memory of the first node (namely, a segment of a local physical memory of the first node), the first node actually writes, through the virtual machine process, the CPU status information into the second physical memory, and further writes the CPU status information into a memory of an RNIC of the first node. In this way, the RNIC may write the CPU status information into the second space in the first physical space of the first storage node through the RDMA operation (for example, a write (write) operation/a send (send) operation), to implement recording of the CPU status information of the first virtual machine.

It should be further noted that, in the running process of the first virtual machine, when monitoring, through the virtual machine process, a case in which a CPU status of the first virtual machine changes, the first node writes, in the foregoing process, the current CPU status information of the first virtual machine into the second space in the first physical space of the first storage node, to update the CPU status information recorded in the second space. This ensures that the latest CPU status information of the first virtual machine is recorded in the second space.

S104: The first node creates the target container in the first virtual machine.

The first node may first access, based on the image ID in the first creation request, the image file that is identified by the image ID and that is in the second storage node, and read the program code in the image file. Further, the first node runs the program code in the first virtual machine, to complete creation of the target container.

Then, the first node sets a status of the first virtual machine to a running state through the virtual machine process.

It should be understood that, when accessing, based on the image ID, the image file that is identified by the image ID and that is in the second storage node, the first node further sends the ID of the target container to the second storage node.

Further, the second storage node may establish a correspondence between the ID of the target container and the image ID. In this way, when the target container is migrated to another node, the another node may find, in the second storage node based on the ID of the target container, the image file corresponding to the ID of the target container, and read the program code in the image file, to create the target container. This implements migration of the target container.

In this case, the target container may normally run in the first virtual machine on the first node.

Refer to FIG. 4. The following describes a data read/write procedure in which the target container created based on the method in FIG. 3 processes a service.

As shown in FIG. 4, a first node creates and runs a virtual machine process, and the virtual machine process creates a first virtual machine. In other words, the first virtual machine runs through the virtual machine process as one or more threads of the virtual machine process. Further, the target container runs in the first virtual machine, and an application process 1, an application process 2, and an application process 3 run in the target container.

Case 1: User equipment accesses the application process 1 in the target container, and writes data 1 into the first virtual machine through the application process 1.

In this case, the first node first writes, through the application process 1, the data 1 into a first physical memory (namely, a physical memory of the first virtual machine). The first physical memory corresponds to a first virtual memory of the virtual machine process. In other words, the first node first writes the data 1 into the first virtual memory corresponding to the first physical memory.

When the first node writes the data into the first virtual memory, the first node allocates a segment of an actual physical memory (namely, a segment of a local physical memory of the first node, such as a second physical memory shown in FIG. 4) to the first virtual memory. Therefore, that the first node writes, through the application process 1, the data 1 into the first virtual memory is actually writing the data 1 into the second physical memory.

Based on a mapping relationship between the first virtual memory and a first physical storage space, the first node may further write the data 1 in the second physical memory into a memory of an RNIC of the first node. In this way, the RNIC may write the data 1 into a first space in the first physical storage space of a first storage node through an RDMA operation (for example, a write operation/send operation), to implement synchronization between the data in the first physical storage space and the data in the first physical memory. For descriptions of the first space, refer to the foregoing descriptions.

Optionally, the RNIC of the first node may write, into the first space in real time through the RDMA operation, the data 1 written into the memory of the RNIC.

Alternatively, the RNIC may periodically write, into the first space, the data written into the memory of the RNIC through the RDMA operation. Certainly, when an amount of the data written into the memory of the RNIC exceeds a threshold, the RNIC may further write these data into the first space through the RDMA operation. This is not limited in embodiments of this application.

Case 2: The user equipment accesses the application process 1 in the target container, and reads data 2 of the first virtual machine through the application process 1.

In this case, the first virtual machine on the first node queries, through the application process 1, the second physical memory (namely, the segment of the local physical memory of the first node) corresponding to the first physical memory. When the first node determines that the data 2 does not exist in the second physical memory, an operating system of the first node triggers a page fault event.

Then, the first node indicates the RNIC to generate an RDMA read request used to read the data 2, to read the data 2 from the first space in the first physical storage space of the first storage node, and further return the data 2 to the application process 1.

In some embodiments, when a control node (for example, the control node 10 in the container cluster 100 shown in FIG. 1) in a container cluster in which the first node is located monitors a case in which the target container needs to be migrated, the control node sends a container migration request to another node other than the first node in the container cluster, to indicate to migrate the target container to the another node.

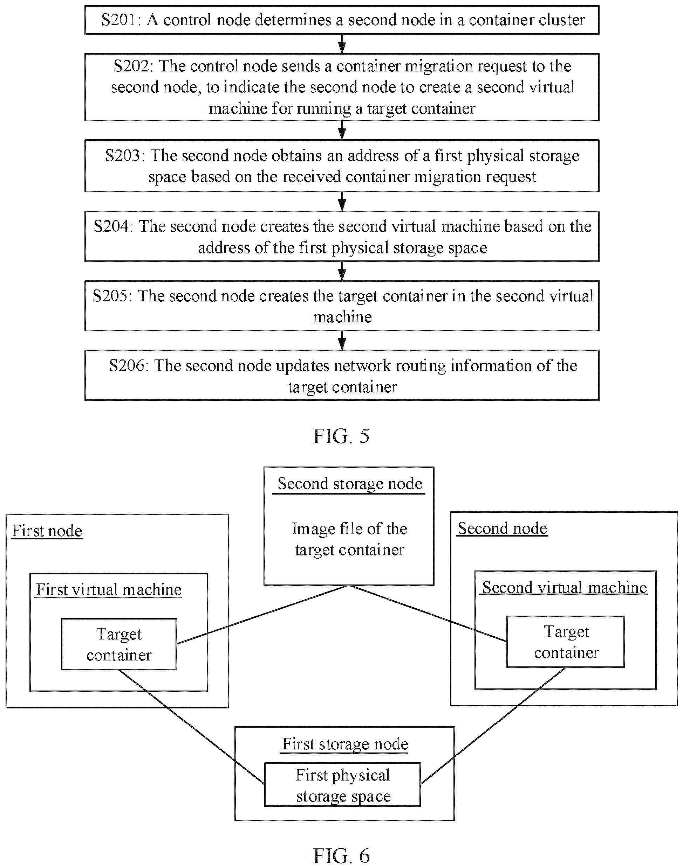

The following describes a migration process of the target container. FIG. 5 is a schematic flowchart of another method for creating a container according to an embodiment of this application. Optionally, the method may be applied to the container cluster shown in FIG. 1, and the method includes the following steps.

S201: A control node determines a second node in a container cluster.

Specifically, when determining that the target container created on a first node by the first node according to the method shown in FIG. 3 needs to be migrated, the control node determines, in the container cluster, the second node configured to migrate the target container. The second node is any worker node other than the first node in the container cluster. For example, assuming that the first node is the worker node 111 in the container cluster 100 shown in FIG. 1, the second node may be any one of the worker node 112, the worker node 113, or the worker node 11n in the container cluster 100. This is not limited herein.

In an example, when the control node monitors a case in which a resource required by the target container on the first node is about to be exhausted, or monitors a case in which a resource of the first virtual machine running the target container on the first node is about to be exhausted, or monitors a case in which a resource of the first node is about to be exhausted, or monitors a case in which the first node (or the first virtual machine, or the target container) is faulty, or monitors a case in which the first node (or the first virtual machine, or the target container) is suspended for another reason, or the control node receives a user indication to migrate the target container, or the like, and the control node determines the second node in the container cluster.

Optionally, the control node may randomly determine the second node in the container cluster. Alternatively, the control node may determine the second node in the container cluster according to a preset policy. The preset policy is, for example, a load balancing policy. This is not limited herein. Alternatively, the control node determines the second node in the container cluster based on an ID of the second node carried in the obtained user indication.

S202: The control node sends a container migration request to the second node, to indicate the second node to create a second virtual machine for running the target container.

The target container running in the first virtual machine on the first node is a to-be-migrated container.

Specifically, the container migration request indicates the second node to create a lightweight virtual machine for running the target container (descriptions are provided below by using an example in which the lightweight virtual machine is a second virtual machine), and indicates the second node to run the target container in the second virtual machine whose creation is completed. The container migration request may include an ID of the target container (or an ID of a pod to which the target container belongs) and a resource parameter of the resource required for running the target container. The resource parameter of the resource required for running the target container includes a size of a CPU resource, a size of a memory resource, and the like that are required for running the target container.

Optionally, the container migration request may further include an ID of the second virtual machine and an ID of the first virtual machine. It may be understood that, the ID of the second virtual machine may also be an ID that is of the second virtual machine for running the target container and that is generated by the second node based on the ID of the target container or the ID of the pod to which the target container belongs in the container migration request. This is not limited herein.

It should be noted that, the ID of the second virtual machine may be the same as or different from the ID of the first virtual machine, and no limitation is imposed on comparison. It may be understood that, when the ID of the second virtual machine is the same as the ID of the second virtual machine, the container migration request may include only an ID of one virtual machine.

S203: The second node obtains an address of a first physical storage space based on the received container migration request.

It should be noted that, to implement migration of the target container without interrupting a service, the second node may obtain the address of the first physical storage space (namely, a physical resource of a memory of the first virtual machine) based on the ID of the first virtual machine and/or the ID of the target container (or the ID of the pod to which the target container belongs) in the container migration request, to determine the first physical storage space as a physical resource of a memory of the second virtual machine. In this way, memory data of the first virtual machine may be used as memory data of the second virtual machine. For detailed descriptions of the first physical storage space, refer to the foregoing descriptions. Details are not described herein again.

Specifically, after receiving the container migration request, the second node may generate a memory request message (for example, a second memory request message) based on the container migration request, and send the second memory request message to the first storage node. The second memory request message is used to request to obtain the address of the first physical storage space allocated by the first storage node to the first virtual machine. In an example, the second node may send the second memory request message to the first storage node through a network interface of the second node.

In a possible implementation, when the first node applies for the first physical storage space for the first virtual machine, the first memory request message sent to the first storage node includes the ID of the first virtual machine, to be specific, it indicates that the first storage node records a correspondence between the address of the first physical storage space and the ID of the first virtual machine.

In this way, the second memory request message includes the ID of the first virtual machine. In this way, in response to receiving the second memory request message, the first storage node searches, based on the ID of the first virtual machine, recorded corresponding information for and determines the address of the first physical storage space that has the correspondence with the ID of the first virtual machine, and returns the address to the second node. In this way, the second node obtains the address of the first physical storage space.

In another possible implementation, when the first node applies for the first physical storage space for the first virtual machine, the first memory request message sent to the first storage node includes the ID of the target container (or the ID of the pod to which the target container belongs), to be specific, it indicates that the first storage node records a correspondence between the address of the first physical storage space and the ID of the target container (or the ID of the pod to which the target container belongs).

In this case, the second memory request message includes the ID of the target container (or the ID of the pod to which the target container belongs). In this way, in response to receiving the second memory request message, the first storage node searches, based on the ID of the target container (or the ID of the pod to which the target container belongs), recorded corresponding information for and determines the address of the first physical storage space that has the correspondence with the ID of the target container (or the ID of the pod to which the target container belongs), and returns the address to the second node. In this way, the second node obtains the address of the first physical storage space.

In still another possible implementation, when the first node applies for the first physical storage space for the first virtual machine, the first memory request message sent to the first storage node includes the ID of the target container (or the ID of the pod to which the target container belongs) and the ID of the first virtual machine, to be specific, it indicates that the first storage node records a correspondence between the address of the first physical storage space, the ID of the target container (or the ID of the pod to which the target container belongs), and the ID of the first virtual machine.

In this case, the second memory request message includes at least one of the ID of the target container (or the ID of the pod to which the target container belongs) or the ID of the first virtual machine. In this way, in response to receiving the second memory request message, the first storage node searches, based on the at least one ID, the recorded corresponding information for and determines an address of the first physical storage space that has a correspondence with the at least one ID, and returns the address to the second node. In this way, the second node obtains the address of the first physical storage space.

In some examples, the second node may register a new DAX storage device based on the obtained address of the first physical storage space. For the descriptions of registering, by the second node, a new DAX storage device based on the obtained address of the first physical storage space, refer to the foregoing descriptions of registering, by the first node, a new DAX storage device based on the address of the first physical storage space that is returned by the first storage node. Details are not described again.

S204: The second node creates the second virtual machine based on the address of the first physical storage space.

Specifically, the second node may determine, based on the resource parameter that is in the container migration request and that is for running the target container, a resource parameter of a resource required for creating the second virtual machine, for example, determine a size of a CPU resource and a memory size that are required for creating the second virtual machine.

Further, the second node first creates, based on the container migration request, a virtual machine process used to create the second virtual machine, and establishes a mapping relationship between a physical memory of the second virtual machine and the first physical storage space through the virtual machine process, to achieve an objective that the first physical storage space is used as a physical resource of a memory of the second virtual machine. For detailed descriptions of establishing, by the second node, the mapping relationship between the physical memory of the second virtual machine and the first physical storage space through the virtual machine process, refer to the descriptions of establishing, by the first node, the mapping relationship between the first physical memory (namely, the physical memory of the first virtual machine) and the first physical storage space through the virtual machine process in S103. Details are not described again.

In addition, based on the determined size of the CPU resource for creating the second virtual machine, the second node further applies for a CPU resource of the second node for the second virtual machine through the virtual machine process. Details are not described herein. It should be noted that, the second node may further access the first physical storage space through the virtual machine process and through an RDMA operation (for example, a read operation), to read CPU status information recorded in a second space of the first physical storage space, and set, based on the read CPU status information, a status of the CPU resource applied for by the second virtual machine. For descriptions of the second space and the CPU status information, refer to related descriptions in S1022. Details are not described again.

In this way, after determining the physical resource of the memory of the second virtual machine and the CPU resource, the second node creates the second virtual machine through the virtual machine process. For example, the second node may read operating system code of the virtual machine from a locally prestored image file of the virtual machine, and run the operating system code in the determined resource through the virtual machine process, to complete creation of the second virtual machine. For related descriptions of the image file of the virtual machine, refer to the foregoing descriptions. Details are not described again.

In addition, after the second node creates the second virtual machine through the virtual machine process, in the running process of the second virtual machine, when monitoring, through the virtual machine process, a case in which a CPU status of the second virtual machine changes, the second node writes the current CPU status information of the second virtual machine into the second space in the first physical space of the first storage node, to update the CPU status information recorded in the second space. This ensures that the latest CPU status information of the second virtual machine is recorded in the second space. For descriptions of writing, by the second node, the CPU status information of the second virtual machine into the second space in the first physical storage space, refer to the foregoing descriptions of writing, by the first node, the current CPU status information of the first virtual machine into the second space in the first physical space of the first storage node. Details are not described again.

S205: The second node creates the target container in the second virtual machine.

The second node may first search the second storage node for an image file of the target container based on the ID of the target container in the container migration request and a correspondence that is between the ID of the target container and an image ID and that is prestored in the second storage node, and read program code in the image file. Further, the second node runs the program code in the second virtual machine, to complete creation of the target container.

For the correspondence between the ID of the target container that is prestored in the second storage node and the image ID, refer to related descriptions in S104. Details are not described again.

It may be understood that, when indicating the second node to migrate the target container, the control node may further send, to the first node that runs the target container before migration, an indication for migrating the target container.

In this way, in a possible case, after creating the second virtual machine and creating the target container in the second virtual machine, the second node sets a status of the second virtual machine to a running state. For example, the second node may set the status of the second virtual machine to the running state through the virtual machine process.

In this case, optionally, when monitoring a case in which the target container created by the second node has started to run, the control node sends an indication for deleting the target container to the first node. In response, the first node deletes a local target container. Alternatively, the first node may delete a local target container when first preset duration after receiving the indication that is sent by the control node and that is for migrating the target container arrives. The first preset duration is used to ensure that the first node writes all the local memory data of the first virtual machine into the first physical storage space.

With reference to the foregoing descriptions, it can be learned that a resource parameter of a resource required for running the second virtual machine for running the target container after migration is the same as a resource parameter of a resource required for running the first virtual machine for running the target container before migration (both are determined based on the resource parameter of the resource required for running the target container), and a CPU status of the second virtual machine is the same as a CPU status of the first virtual machine. Therefore, resource configuration and the CPU status of the second virtual machine are the same as resource configuration and the CPU status of the first virtual machine. In addition, the physical resource of the memory of the second virtual machine is the same as the physical resource of the memory of the first virtual machine, to be specific, the second virtual machine and the first virtual machine share the physical resource of the memory. In other words, the first physical storage space is used as the shared memory of the virtual machine for running a secure container before and after migration. In this way, when the second node sets the status of the second virtual machine to the running state, the memory data that is of the first virtual machine and that is in the local memory of the first node has been written into the first physical storage space through the RDMA operation, which indicates that the memory data and the process status of the second virtual machine are also the same as the memory data and the process status of the first virtual machine. In this way, no memory data is lost when the target container is migrated based on the method in this application, so that a user service is not interrupted, and a user is unaware of the migration.

In addition, the image file of the target container running in the second virtual machine is the same as an image file of the target container running in the first virtual machine. In other words, file data of the target container running in the second virtual machine after migration is also the same as file data of the target container running in the first virtual machine before migration. It can be learned that, the file data of the target container is not lost when the target container is migrated based on the method provided in embodiments of this application.

In another possible case, when the second node completes creation of the second virtual machine and creation of the target container in the second virtual machine, and has received an indication message that is sent by the first node and that is for starting the target container, the second node sets the status of the second virtual machine to the running state. After completing creation of the second virtual machine and creation of the target container in the second virtual machine, but does not receive the indication message that is sent by the first node and that is for starting the target container, the second node first sets the status of the second virtual machine to the pause state, and when receiving the indication message that is sent by the first node and that is for starting the target container, sets the status of the second virtual machine to the running state, to start the target container. In an example, the second node may set the status of the second virtual machine to the pause state or the running state through the virtual machine process.

In this case, after receiving the indication for migrating the target container sent by the control node, the first node queries and determines, in response, whether the memory data in the second physical memory (namely, a segment of a local physical memory of the first node) corresponding to the first physical memory (namely, the physical memory of the first virtual machine) has been completely written into the first physical storage space. It should be understood that, the memory data in the second physical memory is the memory data of the first virtual machine. For descriptions of a correspondence between the first physical memory and the second physical memory, refer to the foregoing descriptions. Details are not described again.

If the first node determines that all the memory data in the second physical memory has been completely written into the first physical storage space, the first node deletes the local target container, and sends the indication message for starting the target container to the second node, to indicate the second node to set the status of the second virtual machine to the running state after completing creation of the second virtual machine and creation of the target container in the second virtual machine.

If the first node determines that the memory data in the second physical memory has not been completely written into the first physical storage space, the first node calculates an amount of remaining memory data that is in the second physical memory and that is not written into the first physical storage space, and determines, based on a preset algorithm, estimated duration required for writing all the remaining memory data into the first physical storage space. The preset algorithm is not specifically limited in embodiments of this application. For example, the preset algorithm may be any algorithm based on a current network rate and the amount of the remaining memory data.

Further, the first node determines whether the estimated duration is less than second preset duration. If the first node determines that the estimated duration is less than or equal to the second preset duration, the first node suspends running of the local target container, and after the estimated duration from a current moment, the first node determines again whether the memory data in the second physical memory has been completely written into the first physical storage space. A specific value of the second preset duration is not limited in embodiments of this application.

If the first node determines, after the estimated duration from the current moment, that the memory data in the second physical memory has been completely written into the first physical storage space, the first node deletes the local target container, and sends the indication message for starting the target container to the second node, to indicate the second node to set the status of the second virtual machine to the running state after completing creation of the second virtual machine and creation of the target container in the second virtual machine.

If the first node determines, after the estimated duration from the current moment, that the memory data in the second physical memory has not been completely written into the first physical storage space, after the second preset duration from the current moment, the first node determines again whether the memory data in the second physical memory has been completely written into the first physical storage space. If the first node determines, after the second preset duration from the current moment, that the memory data in the second physical memory has been completely written into the first physical storage space, the first node deletes the local target container, and sends the indication message for starting the target container to the second node, to indicate the second node to set the status of the second virtual machine to the running state after completing creation of the second virtual machine and creation of the target container in the second virtual machine.

In this way, the memory data and the process status of the second virtual machine for running the target container after the migration are the same as the memory data and the process status of the first virtual machine for running the target container before the migration, and the file data of the target container that runs in the second virtual machine after the migration is the same as the file data of the target container that runs in the first virtual machine before the migration. With reference to the foregoing descriptions, it can be learned that the resource configuration and the CPU status of the second virtual machine for running the target container after the migration are the same as the resource configuration and the CPU status of the first virtual machine for running the target container before the migration. Therefore, no memory data is lost when the target container is migrated based on the method in this application, so that the user service is not interrupted, and the user is unaware of the migration.

S206: The second node updates network routing information of the target container.

Optionally, after setting the status of the second virtual machine to the running state, the second node may update the network routing information that is in routing information stored in the second node and that indicates to access the target container. For example, the second node changes an address of a node to which the container belongs in the original network routing information for accessing the target container from an address of the first node to an address of the second node.

Optionally, the second node may send a routing update message to some or all worker nodes other than the second node in the container cluster, to indicate a worker node that receives the routing update message to update network routing information that is in routing information stored in the worker node and that indicates to access the target container.

Optionally, after receiving a routing update message sent by the first node or the control node, the second node may also update the network routing information that is in the routing information stored in the second node and that indicates to access the target container.

It may be understood that, when monitoring a case in which the target container has been migrated to the second node (for example, the control node monitors a case in which the second virtual machine on the second node starts to run normally), the control node sends the routing update message to some or all of the worker nodes in the container cluster, to indicate the worker node that receives the routing update message to update the network routing information that is in the routing information stored in the worker node and that indicates to access the target container. Alternatively, after deleting the local target container, the first node updates network routing information that is in routing information stored in the first node and that indicates to access the target container, and sends the routing update message to some or all worker nodes other than the first node in the container cluster, to indicate the worker node that receives the routing update message to update the network routing information that is in the routing information stored in the worker node and that indicates to access the target container. This is not limited in embodiments of this application.

In this case, after the target container is created on the first node according to the method in a first possible implementation, when the target container is migrated to another node (for example, the second node) in the container cluster, only the physical resource (namely, the first physical storage space on the first storage node) of the memory of the first virtual machine for running the first node of the target container before the migration needs to be determined as the physical resource of the memory of the second virtual machine for running the second node of the target container after the migration. In other words, the first physical storage space on the first storage node is not only used as a memory of the target container that runs in the first virtual machine before the migration, but also used as a memory of the target container that runs in the second virtual machine after the migration. In other words, the target container that runs in the first virtual machine before the migration and the target container that runs in the second virtual machine after the migration share the memory, which is specifically shown in FIG. 6. In addition, the image file of the target container that runs in the first virtual machine before the migration is also the same as the image file of the target container that runs in the second virtual machine after the migration. Therefore, according to the method in the first possible implementation, when the container is migrated, the memory data and the file data are not lost, the user service is not interrupted, and the user is unaware of the migration.

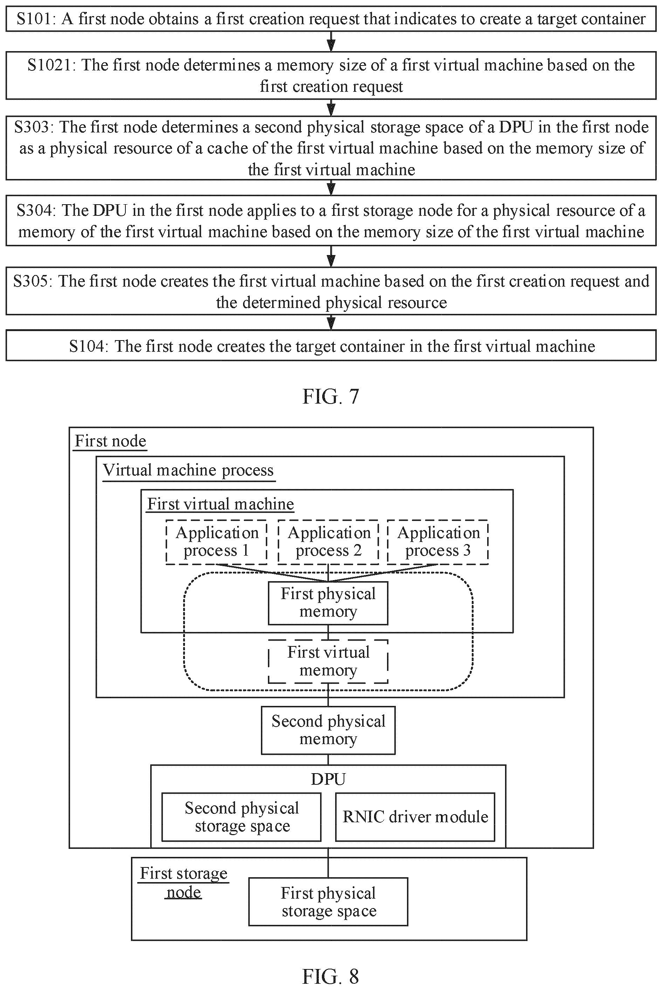

In a second possible implementation, FIG. 7 is a schematic flowchart of still another method for creating a container according to an embodiment of this application. Optionally, the method is applied to the container cluster 100 shown in FIG. 1, and may be performed by a first node having the hardware structure shown in FIG. 2. In the method, the first node may first perform S101 and S1021 in Embodiment 1, and then the first node may perform step S303 to step S305.

S303: A first node determines a second physical storage space of a DPU in the first node as a physical resource of a cache of the first virtual machine based on the memory size of the first virtual machine.

The DPU is configured in the first node. For descriptions of the DPU, refer to the foregoing descriptions. The second physical storage space is a segment of a memory space in a storage module of the DPU, and the second physical storage space may be a common memory space, for example, a memory unit formed by a DRAM. It may be learnt that, the second physical storage space is also a segment of a local storage space of the first node.

Specifically, after determining the memory size of the first virtual machine based on a resource parameter of a resource required for running a target container in a first creation request, the first node determines, based on the memory size of the first virtual machine, a segment of a physical storage space (namely, the second physical storage space) in the DPU as the physical resource of the cache of the first virtual machine. A size of the second physical storage space is not limited in embodiments of this application. For example, the size of the second physical storage space may be greater than or equal to the memory size of the first virtual machine, or may be less than or equal to the memory size of the first virtual machine.

S304: The DPU in the first node applies to a first storage node for a physical resource of a memory of the first virtual machine based on the memory size of the first virtual machine.

Specifically, the DPU may apply to the first storage node for a segment of a physical storage space (namely, a first physical storage space) based on the memory size of the first virtual machine, to use the segment of the physical storage space as the physical resource of the memory of the first virtual machine.

For detailed descriptions of applying, by the DPU in the first node, to the first storage node for the physical resource of the memory of the first virtual machine based on the memory size of the first virtual machine, refer to descriptions of the process in which the first node applies to the first storage node for the physical resource of the memory of the first virtual machine based on the memory size of the first virtual machine in S1022. Details are not described again.

It may be understood that, a difference between S1022 and S303 lies in different execution bodies. S1022 is executed by the first node. For example, S1022 may be jointly executed by a CPU and a network adapter of the first node, and S303 is executed by an independent unit DPU in the first node. For detailed descriptions of the DPU, refer to the foregoing related descriptions of the DPU in the first node shown in FIG. 2. Details are not described herein again.

It should be noted that, after receiving an address of the first physical storage space that is returned by the first storage node, the DPU in the first node stores the address of the first physical storage space.

It should be further noted that, a size of the first physical storage space may be greater than or equal to the size of the second physical storage space of the DPU, or may be less than or equal to the size of the second physical storage space of the DPU, which is not limited herein.

S305: The first node creates the first virtual machine based on the first creation request and the determined physical resource.

Specifically, the first node may create, based on the first creation request, a virtual machine process used to create the first virtual machine. For related descriptions of creating the virtual machine process by the first node, refer to the related descriptions of S103. Details are not described again.

Further, the first node may establish a mapping relationship between a first physical memory and the second physical storage space through the virtual machine process, and establish a mapping relationship between the second physical storage space and the first physical storage space via the DPU, so that the first physical storage space is used as the physical resource of the memory of the first virtual machine, and the second physical storage space is used as the physical resource of the cache of the first virtual machine. For detailed descriptions of the first physical memory, the first physical storage space, and the second physical storage space, refer to the foregoing descriptions. Details are not described again.

Specifically, the first node may establish a mapping relationship between the first physical memory and a first virtual memory of the virtual machine process through the virtual machine process. The first node further establishes a mapping relationship between the first virtual memory and a segment of a virtual space (referred to as a DPU virtual space below) of the DPU through the virtual machine process. The second physical storage space is used as a physical storage space of the DPU virtual space, to achieve an objective of establishing the mapping relationship between the first physical memory and the second physical storage space. Further, the DPU in the first node establishes the mapping relationship between the second physical storage space and the first physical storage space. Therefore, the first physical storage space is used as the physical resource of the memory of the first virtual machine, and the second physical storage space is used as the physical resource of the cache of the first virtual machine. The first virtual memory is a segment of a memory in a virtual memory of the virtual machine process, and an address of the first virtual memory is in one-to-one correspondence with an address of the first physical memory. The DPU virtual space includes an address that is in one-to-one correspondence with the address of the first virtual memory, to be specific, the address of the first virtual memory is in one-to-one correspondence with an address of a segment or all of the DPU virtual space. The first physical storage space includes an address that is in one-to-one correspondence with the address of the DPU virtual space. To be specific, the address of the DPU virtual space is in one-to-one correspondence with an address of a segment or all of the first physical storage space.

In an example, the first node may establish the mapping relationship between the first virtual memory and the DPU virtual space by invoking an mmap interface and through the virtual machine process, and the DPU may allocate a segment of an idle physical storage space in the second physical storage space to the created first virtual machine when the created first virtual machine writes data into the DPU virtual space, to store the data.

It may be understood that, the DPU in the first node receives and stores the address of the first physical storage space that is returned by the first storage node. In other words, the mapping relationship between the second physical storage space and the first physical storage space is established.

In addition, the first node further applies, based on a determined size of a CPU resource required by the first virtual machine, for a CPU resource of the first node for the first virtual machine through the virtual machine process. Details are not described.

In this way, after determining the physical resource of the memory of the first virtual machine, the physical resource of the cache, and the CPU resource of the first virtual machine, the first node may create the first virtual machine through the virtual machine process. For example, the first node may read operating system code of the virtual machine from a locally prestored image file of the virtual machine, and run the operating system code in the determined resource through the virtual machine process, to complete creation of the first virtual machine. For related descriptions of the image file of the virtual machine, refer to the foregoing descriptions. Details are not described again.

It should be further noted that, after the first virtual machine is created, the first node may write CPU status information of the first virtual machine into a second space in the first physical storage space via the second physical storage space and through the virtual machine process. For descriptions of the second space and the CPU status information, refer to related descriptions in S1022. Details are not described herein again.

Specifically, the first node may first write, through the virtual machine process, the CPU status information of the first virtual machine into the first virtual memory. An actual physical storage space corresponding to the first virtual memory is a second physical memory (namely, a segment of a local physical memory of the first node). Therefore, the first node actually writes the CPU status information into the second physical memory through the virtual machine process, and further writes the CPU status information into the second physical storage space in the DPU in the first node. In this way, the DPU writes, based on an RNIC driver module configured by the DPU, the CPU status information in the second storage space into the second space in the first physical space of the first storage node through an RDMA operation (for example, a write operation/send operation), to implement recording of the CPU status information of the first virtual machine.

It should be further noted that, in the running process of the first virtual machine, when monitoring, through the virtual machine process, a case in which a CPU status of the first virtual machine changes, the first node writes the current CPU status information of the first virtual machine into the second space in the first physical space of the first storage node via the second physical storage space and in the foregoing described process, to update the CPU status information recorded in the second space. This ensures that the latest CPU status information of the first virtual machine is recorded in the second space.

Then, the first node performs S104, to complete creation of the target container, and run the target container.

Refer to FIG. 8. The following describes a data read/write procedure in which a target container created based on the method in FIG. 7 processes a service. As shown in FIG. 8, a first node runs a virtual machine process, and the virtual machine process creates a first virtual machine. In other words, the first virtual machine runs through the virtual machine process as one or more threads of the virtual machine process. Further, the target container runs in the first virtual machine, and an application process 1, an application process 2, and an application process 3 run in the target container.

Case 1: User equipment accesses the application process 1 in the target container, and writes data 1 into the first virtual machine through the application process 1.

In this case, the first node first writes, through the application process 1, the data 1 into a first physical memory (namely, a physical memory of the first virtual machine). The first physical memory is a first virtual memory of the virtual machine process. In other words, the first node first writes the data 1 into the first virtual memory corresponding to the first physical memory.

When the first node writes the data into the first virtual memory, the first node allocates a segment of an actual physical memory (namely, a segment of a local physical memory of the first node, such as a second physical memory shown in FIG. 8) to the first virtual memory. Therefore, that the first node writes, through the application process 1, the data 1 into the first virtual memory is actually writing the data 1 into the second physical memory.

Further, based on a mapping relationship between the first virtual memory and a DPU virtual space, the first node writes the data 1 in the second physical memory into the DPU virtual space through the application process 1, so that a DPU may allocate, in a second physical storage space, a segment of an address space to the DPU virtual space to store the data 1.

Then, the DPU writes, based on an RNIC driver module configured by the DPU, the data 1 in the second physical storage space into a first space in a first physical storage space of the first storage node through an RDMA operation (for example, a write operation/send operation), to implement synchronization between the data in the first physical storage space and the data in the first physical memory. For descriptions of the first space, refer to the foregoing descriptions.

Optionally, the DPU may write, in real time, the data 1 written into the second physical storage space into the first space through the RDMA operation.

Alternatively, the DPU may periodically write the data written into the second physical storage space into the first space through the RDMA operation. Certainly, when an amount of the data written into the second physical storage space exceeds a threshold, the DPU may further write these data into the first space through the RDMA operation. This is not limited in embodiments of this application.

It should be understood that, in the foregoing process in which the first node writes the data 1 into the first physical storage space, for a process that is initiated by the first virtual machine on the first node to write the data 1 into the first physical storage space, after the data 1 is written into the second physical storage space of the DPU, the first virtual machine on the first node may determine that a data writing task of the process has been completed. Subsequently, as an independent unit in the first node, the DPU writes, through the RDMA operation, the data 1 written into the second physical storage space into the first physical storage space.

In other words, the first virtual machine on the first node does not need to determine, after receiving a response packet that is of the RDMA operation and that is returned by the first storage node, that the data writing task of the process has been completed. In other words, the second physical storage space of the DPU is used as a cache for the first node to write the data into the first physical storage space. For the first node, when it is determined that the data 1 has been written into the second physical storage space, it is determined that the data 1 has been written into the first physical storage space. In this way, a related process resource that is in the first node and that is used to write the data can be quickly released, thereby saving a resource required by the first node to run a process used to write the data.

Case 2: The user equipment accesses the application process 1 in the target container, and reads data 2 of the first virtual machine through the application process 1.

In this case, the first virtual machine on the first node queries, through the application process 1, the second physical memory (namely, a segment of a local physical memory of the first node) corresponding to the first physical memory. When the first node determines that the data 2 does not exist in the second physical memory, an operating system of the first node triggers a page fault event.

Then, the first virtual machine on the first node further queries whether the second physical storage space of the DPU includes the data 2, and when the second physical storage space includes the data 2, returns the data 2 to the application process 2. When the second physical storage space does not include the data 2, the RNIC driver module in the DPU generates an RDMA read request used to read the data 2, to read the data 2 from the first space in the first physical storage space of the first storage node, and further return the data 2 to the application process 1.

In some possible cases, a hot data algorithm may be preset in the DPU. In this way, the DPU may determine, based on the hot data algorithm, data (referred to as hot data) that is accessed by the application process in the target container for a large quantity of times in a recent period of time. Further, the DPU may pre-read these hot data from the first physical storage space to the second physical storage space through the RDMA operation. Therefore, when the application process in the target container accesses the hot data again, the DPU may directly return the data to the application process. This improves data access efficiency of the application process.

In some embodiments, when a control node (for example, the control node 10 in the container cluster 100 shown in FIG. 1) in a container cluster in which the first node is located monitors a case in which the target container needs to be migrated, the control node sends a container migration request to another node other than the first node in the container cluster, to indicate to migrate the target container to the another node.

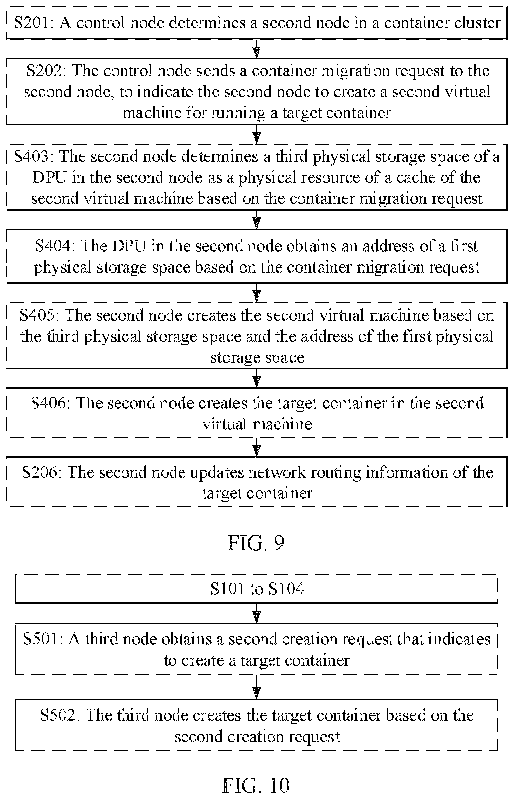

FIG. 9 is a schematic flowchart of still another method for creating a container according to an embodiment of this application. Optionally, the method may be applied to the container cluster shown in FIG. 1. In the method, S201 and S202 may be first performed, and then the following steps are performed.

S403: A second node determines a third physical storage space of a DPU in the second node as a physical resource of a cache of a second virtual machine based on a container migration request.

For descriptions of the DPU, refer to the foregoing descriptions. Details are not described again.

For detailed descriptions of determining, by the second node, the third physical storage space of the DPU in the second node as the physical resource of the cache of the second virtual machine based on the container migration request, refer to the descriptions of determining, by the first node, the second physical storage space of the DPU in the first node as the physical resource of the cache of the first virtual machine based on the memory size of the first virtual machine that is determined based on the first creation request in S303. Details are not described again.

S404: The DPU in the second node obtains an address of a first physical storage space based on the container migration request.

Specifically, for detailed descriptions of obtaining, by the DPU in the second node, the address of the first physical storage space based on the container migration request, refer to the descriptions of obtaining, by the second node, the address of the first physical storage space based on the received container migration request in S203. Details are not described again.

It may be understood that, a difference between S404 and S203 lies in different execution bodies. S203 is executed by the second node. For example, S1022 may be jointly executed by a CPU and a network adapter of the second node, and S404 is executed by an independent unit DPU in the second node. For detailed descriptions of the DPU, refer to the foregoing related descriptions of the DPU in the first node shown in FIG. 2. Details are not described herein again.

S405: The second node creates the second virtual machine based on the third physical storage space and the address of the first physical storage space.

The second node may first create, based on the container migration request, a virtual machine process used to create the second virtual machine, establish a mapping relationship between a physical memory of the second virtual machine and the third physical storage space through the virtual machine process, and establish a mapping relationship between the third physical storage space and the first physical storage space via the DPU in the second node, so that the first physical storage space is used as a physical resource of a memory of the second virtual machine, and the third physical storage space of the DPU is used as the physical resource of the cache of the second virtual machine.

For detailed descriptions of establishing, by the second node, the mapping relationship between the physical memory of the second virtual machine and the third physical storage space, and establishing the mapping relationship between the third physical storage space and the first physical storage space, refer to the descriptions of establishing, by the first node, the mapping relationship between the first physical memory and the second physical storage space, and establishing the mapping relationship between the second physical storage space and the first physical storage space in S305. Details are not described again.

Specifically, the second node may further determine, based on a resource parameter that is in the container migration request and that is for running the target container, a resource parameter of a resource required for creating the second virtual machine, for example, determine a size of a CPU resource required for creating the second virtual machine. It should be noted that, the second node may further indicate the DPU to access the first physical storage space through an RDMA operation (for example, a read operation), to read CPU status information in a second space of the first physical storage space, and set, based on the read CPU status information, a status of the CPU resource applied for by the second virtual machine. For descriptions of the second space and the CPU status information, refer to related descriptions in S1022. Details are not described again.

In this way, the second node may create, based on the physical resource of the memory of the second virtual machine, the physical resource of the cache of the second virtual machine, and the CPU resource, the second virtual machine through the virtual machine process. For example, the second node may read operating system code of the virtual machine from a locally prestored image file of the virtual machine, and run the operating system code in the determined resource through the virtual machine process, to complete creation of the second virtual machine. For related descriptions of the image file of the virtual machine, refer to the foregoing descriptions. Details are not described again.

In addition, after the second node creates the second virtual machine through the virtual machine process, in the running process of the second virtual machine, when monitoring, through the virtual machine process, a case in which a CPU status of the second virtual machine changes, the second node writes the current CPU status information of the second virtual machine into the second space in the first physical space of the first storage node via the third physical storage space, to update the CPU status information recorded in the second space. This ensures that the latest CPU status information of the second virtual machine is recorded in the second space. For descriptions of writing, by the second node, the CPU status information of the second virtual machine into the second space in the first physical storage space via the third physical storage space, refer to related descriptions of writing, by the first node, the current CPU status information of the first virtual machine into the second space in the first physical space of the first storage node via the second physical storage space in S305. Details are not described again.

S406: The second node creates the target container in the second virtual machine.

The second node creates the target container in the second virtual machine, to complete migration of the target container. For detailed descriptions of S406, refer to the foregoing descriptions of S205.

It should be noted that, in S406, the first node queries and determines whether memory data of the first virtual machine in the second physical storage space of the DPU has been completely written into the first physical storage space, to determine whether to send an indication message for starting the target container to the second node.

For detailed descriptions of querying and determining, by the first node, whether the memory data of the first virtual machine in the second physical storage space of the DPU has been completely written into the first physical storage space, to determine whether to send the indication message for starting the target container to the second node, refer to the descriptions of querying and determining, by the first node, whether the memory data in the second physical memory has been completely written into the first physical storage space, to determine whether to send the indication message for starting the target container to the second node in S205. Details are not described again.

Then, the second node performs S206, to complete migration of the target container.

In this case, after the target container is created on the first node according to the method in a second possible implementation, when the target container is migrated to another node (for example, the second node) in the container cluster, only the physical resource (namely, the first physical storage space on the first storage node) of the memory of the first virtual machine for running the first node of the target container before the migration needs to be determined as the physical resource of the memory of the second virtual machine for running the second node of the target container after the migration. In other words, the first physical storage space on the first storage node is not only used as a memory of the target container that runs in the first virtual machine before the migration, but also used as a memory of the target container that runs in the second virtual machine after the migration. In other words, the target container that runs in the first virtual machine before the migration and the target container that runs in the second virtual machine after the migration share the memory, which is specifically shown in FIG. 6. In addition, the image file of the target container that runs in the first virtual machine before the migration is also the same as the image file of the target container that runs in the second virtual machine after the migration. Therefore, according to the method in the second possible implementation, when the container is migrated, the memory data and the file data are not lost, the user service is not interrupted, and the user is unaware of the migration.

In addition, in the second possible implementation, because the DPU in the first node and the DPU in the second node may pre-cache hot data of the target container, when an application process in the target container accesses these hot data, the DPU may directly return these data to the application process. This improves data access efficiency of the application process.

In a third possible implementation, to further improve efficiency of migration of a container, FIG. 10 is a schematic flowchart of still another method for creating a container according to an embodiment of this application. Optionally, the method is applied to the container cluster 100 shown in FIG. 1. The method may continue to perform the following steps based on the method in S101 to S104 shown in FIG. 3 or FIG. 7.

S501: A third node obtains a second creation request that indicates to create a target container.

The target container is a target container created by a first node based on the method shown in FIG. 3 or FIG. 7. The third node is any worker node other than the first node in the container cluster in which the first node is located. In an example, assuming that the first node is a worker node 111 in the container cluster 100 shown in FIG. 1, and the third node may be a worker node 113 in the container cluster 100 shown in FIG. 1.

For descriptions of obtaining, by the third node, the second creation request that indicates to create the target container, refer to the foregoing descriptions of obtaining, by the first node, the first creation request in S101. For descriptions of the second creation request, refer to the foregoing descriptions of the first creation request in S101. Details are not described again.

S502: The third node creates the target container based on the second creation request.

The third node may first create, based on the second creation request, a third virtual machine for running the target container, and create the target container in the third virtual machine.

Specifically, for detailed descriptions of creating the target container by the third node based on the second creation request, refer to the descriptions of creating the target container by the first node based on the first creation request in the method shown in FIG. 3, or refer to the descriptions of creating the target container by the first node based on the first creation request in the method shown in FIG. 7. Details are not described again.

It should be noted that, a physical resource of a memory of the third virtual machine is the first physical storage space. In other words, the physical resource of the memory of the third virtual machine that is on the third node and that is for running the target container is the same as a physical resource of a memory of the first virtual machine that is on the first node and that is for running the target container. Alternatively, it may be understood that, the third virtual machine that is on the third node and that is for running the target container and the first virtual machine that is on the first node and that is for running the target container share the physical resource of the same memory.

It should be further noted that, after creating the target container, the third node sets a status of the third virtual machine in which the target container runs to a pause state. In this way, the target container that runs in the third virtual machine on the third node may be used as a backup container of the target container that runs in the first virtual machine on the first node. In other words, the target container that runs in the first virtual machine on the first node is a primary target container, and the target container that runs in the third virtual machine on the third node is a standby target container.

It should be further noted that, a sequence of creating the primary target container by the first node and creating the standby target container by the third node is not specifically limited in embodiments of this application. For example, the first node may first create the primary target container based on the method in FIG. 3 or FIG. 7, and then the third node creates the standby target container based on the method in FIG. 10. Alternatively, when the first node creates the primary target container based on the method in FIG. 3 or FIG. 7, the third node creates the standby target container based on the method in FIG. 10. This is not limited thereto.

In this case, in embodiments of this application, creation of the primary target container and the standby target container is completed.

In some embodiments, when the control node monitors a case in which the target container on the first node needs to be migrated, in a possible implementation, the control node sends, to the third node, an indication message for starting the target container. In response, the third node sets the status of the third virtual machine for running the target container to a running state. Therefore, the target container that is in the third virtual machine and that is used as the standby target container starts to process a service.

Optionally, before the third node sets the status of the third virtual machine to the running state, the third node may further read latest CPU status information of the first virtual machine from a second space of the first physical storage space through an RDMA operation, to update a CPU status of the third virtual machine. For example, the third node may directly read the latest CPU status information of the first virtual machine from the second space of the first physical storage space through the RDMA operation, or a DPU of the third node reads the latest CPU status information of the first virtual machine from the second space of the first physical storage space through the RDMA operation. This is not limited herein.

Optionally, the control node further sends an indication message for suspending/deleting the target container to the first node. In response, the first node deletes a local target container.

In another possible implementation, the control node sends, to the first node, an indication message for migrating the target container. In response, the first node queries and determines whether locally stored memory data of the first virtual machine has been completely written into the first physical storage space, to determine whether to send the indication message for starting the target container to the third node. For descriptions of determining, by the first node, whether the locally stored memory data of the first virtual machine has been completely written into the first physical storage space, refer to the descriptions of querying and determining, by the first node, whether the memory data in the second physical memory has been completely written into the first physical storage space in S205. Details are not described again.

After receiving the indication message that is sent by the first node and that is for starting the target container, the third node sets the status of the third virtual machine to the running state. Therefore, the target container that is in the third virtual machine and that is used as the standby target container starts to process the service.

Optionally, before the third node sets the status of the third virtual machine to the running state, the third node may further read the latest CPU status information of the first virtual machine from the second space of the first physical storage space through the RDMA operation, to update the CPU status of the third virtual machine.

Further, after the third node sets the status of the third virtual machine to the running state, the third node and the first node update network routing information for accessing the target container, to complete migrating the target container from the first node to the third node. Alternatively, after the first node sends the indication message for starting the target container to the third node, the first node and the third node update the network routing information for accessing the target container, to complete migrating the target container from the first node to the third node.

For descriptions of updating, by the third node and the first node, the network routing information for accessing the target container, refer to descriptions of updating, by the second node, the network routing information of the target container in S206. Details are not described again.

It can be learned that, when container migration is performed according to the method provided in this embodiment, a virtual machine for running the target container does not need to be newly created when the control node indicates to migrate the container, but a pre-created virtual machine for running the backup container is directly started, so that container migration is efficiently completed without losing the memory data, without interrupting a user service, and without being aware of by a user.

In addition, in this embodiment, when the target container is migrated from the first node to the third node, the target container that runs in the third virtual machine on the third node is upgraded to the primary target container, and is configured to run an application process to process the user service. Then, any worker node other than the third node (or other than the third node and the first node) in the container cluster to which the third node belongs may obtain a creation request that indicates to create the target container, to create a standby target container of the primary target container. Details are not described.

In this case, after the primary target container is created on the first node and the standby target container is created on the third node according to the method in a third possible implementation, because the primary target container and the standby target container share the memory (to be specific, share the first physical storage space of the first storage node), in embodiments of this application, by switching running states of the primary target container and the standby target container, container migration may be quickly completed without losing the memory data, without interrupting the user service, and without being aware of by the user.

In summary, when a container created according to the method for creating a container provided in embodiments of this application is migrated, the container before and after the migration shares a segment of a physical storage space in a storage node, so that container migration can be completed without losing the memory data, without interrupting the user service, and without being aware of by the user.

The foregoing mainly describes the solutions provided in embodiments of this application from the perspective of the methods.

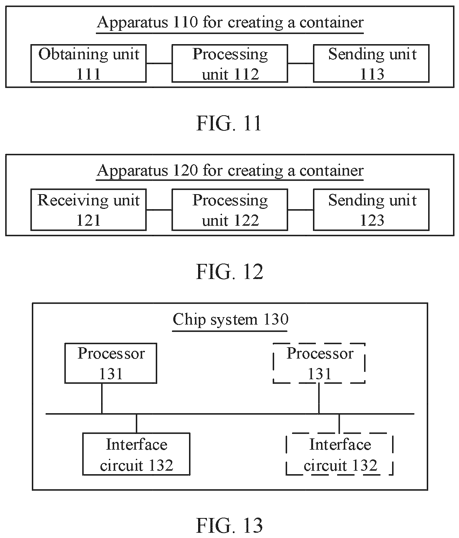

To implement the foregoing functions, FIG. 11 is a schematic diagram of a structure of an apparatus 110 for creating a container according to an embodiment of this application. The apparatus 110 for creating a container is used in the first node in the container cluster shown in FIG. 1. The apparatus 110 for creating a container may be configured to perform the foregoing method for creating a container, for example, configured to perform a part performed by the first node in the method shown in FIG. 3, FIG. 5, FIG. 7, FIG. 9, or FIG. 10.

The apparatus 110 for creating a container may include an obtaining unit 111 and a processing unit 112.

The obtaining unit 111 is configured to obtain a first creation request that indicates to create a target container. The processing unit 112 is configured to create a first virtual machine based on the first creation request, and run the target container in the first virtual machine. The target container is a secure container, the first creation request includes a resource parameter of the first virtual machine in which the target container runs, and a physical resource of a memory of the first virtual machine is a first physical storage space in a first storage node.

In an example, with reference to FIG. 3, the obtaining unit 111 may be configured to perform S101, and the processing unit 112 may be configured to perform S103 and S104.

Optionally, the first node accesses the first physical storage space through RDMA.

Optionally, the first physical storage space is a persistent memory medium.

Optionally, before creating the first virtual machine based on the first creation request, the processing unit 112 is further configured to: determine a memory size of the first virtual machine based on the first creation request; and apply to the first storage node for the first physical storage space based on the memory size of the first virtual machine, and determine the first physical storage space as the physical resource of the memory of the first virtual machine. The first physical storage space is greater than or equal to the memory size of the first virtual machine.

In an example, with reference to FIG. 3, the processing unit 112 may be configured to perform S102.

Optionally, the processing unit 112 is further configured to: determine a second physical storage space of a DPU in the first node as a physical resource of a cache of the first virtual machine; and indicate the DPU to establish a mapping relationship between the second physical storage space and the first physical storage space. The DPU in the first node is configured to access the first physical storage space via the RDMA, and is configured to write data in the second physical storage space into the first physical storage space.

In an example, with reference to FIG. 7, the processing unit 112 may be configured to perform S303.

Optionally, the DPU in the first node is further configured to read hot data of the target container from the first physical storage space.

Optionally, the first node is any node in a container cluster, and the container cluster further includes a second node; and when the target container is migrated to the second node, a physical resource of a memory of a second virtual machine in which the target container runs and that is on the second node is the first physical storage space.

Optionally, the first node is any node in a container cluster, the container cluster further includes a third node, the third node is configured to create a backup container of the target container, a third virtual machine in which the backup container runs and that is on the third node is in a pause state, and a physical resource of a memory of the third virtual machine is the first physical storage space.

Optionally, when the first virtual machine is in a fault state or in a pause state, the third virtual machine is in a running state.

Optionally, the processing unit 112 is further configured to: after the target container is migrated to another node in the container cluster, update network routing information for accessing the target container.

Optionally, the apparatus 110 for creating a container further includes: a sending unit 113, configured to send a routing update message to the another node other than the first node in the container cluster after the target container is migrated to the another node in the container cluster, to enable the another node to update the network routing information for accessing the target container.

For specific descriptions of the foregoing optional manners, refer to the foregoing method embodiments. Details are not described herein again. In addition, for explanation of any apparatus 110 for creating a container provided above and descriptions of beneficial effects, refer to the foregoing corresponding method embodiments. Details are not described again.

In an example, with reference to FIG. 2, functions implemented by the obtaining unit 111 and the sending unit 113 in the apparatus 110 for creating a container may be implemented through the network interface 203 in FIG. 2, or a function implemented by the obtaining unit 111 may be implemented through an input interface (for example, an input interface such as a keyboard, a touchscreen, or a mouse) of the first node shown in FIG. 2, and a function implemented by the processing unit 112 may be implemented via the processor 201 in FIG. 2.

FIG. 12 is a schematic diagram of a structure of an apparatus 120 for creating a container according to an embodiment of this application. The apparatus 120 for creating a container is used in the second node in the container cluster shown in FIG. 1. The apparatus 120 for creating a container may be configured to perform the foregoing method for creating a container, for example, configured to perform a part performed by the second node in the method shown in FIG. 5 or FIG. 9.

The apparatus 120 for creating a container may include a receiving unit 121 and a processing unit 122.

The receiving unit 121 is configured to receive a container migration request, where the container migration request indicates to migrate a target container that runs in a first virtual machine on a first node to the second node, and indicates the second node to create a second virtual machine for running the target container, where the target container is a secure container. The processing unit 122 is configured to determine a first physical storage space in a first storage node as a physical resource of a memory of the second virtual machine; create the second virtual machine based on the physical resource of the memory of the second virtual machine; and run the target container in the second virtual machine. The first physical storage space is a physical resource of a memory of the first virtual machine.

In an example, with reference to FIG. 5, the receiving unit 121 may be configured to perform S202, and the processing unit 122 may be configured to perform S203, S204, and S205.

Optionally, the container migration request includes an ID of the target container, and the apparatus 120 for creating a container further includes: a sending unit 123, configured to send a memory request message including the ID of the target container to the first storage node, where the memory request message is used to request to obtain an address of the first physical storage space that has a correspondence with the ID of the target container. The receiving unit 121 is further configured to receive the address of the first physical storage space that is returned by the first storage node. The processing unit 123 is specifically configured to determine the first physical storage space indicated by the received address as the physical resource of the memory of the second virtual machine.

Optionally, the container migration request includes an ID of the first virtual machine, and the apparatus 120 for creating a container further includes: a sending unit 123, configured to send a memory request message including the ID of the first virtual machine to the first storage node, where the memory request message is used to request to obtain an address of the first physical storage space that has a correspondence with the ID of the first virtual machine. The receiving unit 122 is configured to receive the address of the first physical storage space that is returned by the first storage node. The processing unit 123 is specifically configured to determine the first physical storage space indicated by the received address as the physical resource of the memory of the second virtual machine.

For specific descriptions of the foregoing optional manners, refer to the foregoing method embodiments. Details are not described herein again. In addition, for explanation of any apparatus 120 for creating a container provided above and descriptions of beneficial effects, refer to the foregoing corresponding method embodiments. Details are not described again.

In an example, with reference to FIG. 2, functions implemented by the receiving unit 121 and the sending unit 123 in the apparatus 120 for creating a container may be implemented through the network interface 203 in FIG. 2, and a function implemented by the processing unit 122 may be implemented via the processor 201 in FIG. 2.

A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be noted that, in this application, module division in FIG. 11 or FIG. 12 is an example, and is merely a logical function division. During actual implementation, another division manner may be used. For example, two or more functions may be integrated into one processing module. The integrated module may be implemented in a form of hardware, or may be implemented in a form of a software functional module.

Embodiments of this application further provide a container cluster, where the container cluster includes a first node and a second node. The first node is configured to perform a part performed by the first node in the foregoing method, for example, configured to perform the method shown in FIG. 3 to create a target container. The second node is configured to perform a part that is performed by the second node in the foregoing method, for example, perform the method shown in FIG. 5, to migrate the target container running on the first node to the second node.

Embodiments of this application further provide a chip system 130. As shown in FIG. 13, the chip system 130 includes at least one processor and at least one interface circuit. In an example, when the chip system 130 includes one processor and one interface circuit, the processor may be a processor 131 shown in a solid-line box (or a processor 131 shown in a dashed-line box) in FIG. 13, and the interface circuit may be an interface circuit 132 shown in a solid-line box (or an interface circuit 132 shown in a dashed-line box) in FIG. 13. When the chip system 130 includes two processors and two interface circuits, the two processors include the processor 131 shown in the solid-line box and the processor 131 shown in the dashed-line box in FIG. 13, and the two interface circuits include the interface circuit 132 shown in the solid-line box and the interface circuit 132 shown in the dashed-line box in FIG. 13. This is not limited.

The processor 131 and the interface circuit 132 may be connected to each other through a line. For example, the interface circuit 132 may be configured to receive a signal (for example, obtain the first creation request or the container migration request described above). For another example, the interface circuit 132 may be configured to send a signal to another module (for example, the processor 131). For example, the interface circuit 132 may read instructions stored in the memory, and send the instructions to the processor 131. When the instructions are executed by the processor 131, the apparatus for creating a container is enabled to perform the steps in the foregoing embodiments. Certainly, the chip system 130 may further include another discrete device. This is not specifically limited in embodiments of this application.

Embodiments of this application further provide a computer program product and a computer-readable storage medium configured to store the computer program product.

The computer program product may include one or more program instructions. When the one or more program instructions are run by one or more processors, functions or some functions described for FIG. 3, FIG. 5, FIG. 7, FIG. 9, or FIG. 10 may be provided. Therefore, for example, one or more features of S101 to S104 in FIG. 3 may be implemented by one or more instructions in the computer program product.

In some examples, the apparatus for creating a container described for FIG. 3, FIG. 5, FIG. 7, FIG. 9, or FIG. 10 may be configured to provide various operations, functions, or actions in response to one or more program instructions stored in the computer-readable storage medium.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer-executable instructions are executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for creating a container, applied to a first node, wherein the method comprises:
obtaining a first creation request that indicates to create a target container, wherein the target container is a secure container, and the first creation request comprises a resource parameter of a first virtual machine in which the target container runs;
creating the first virtual machine based on the first creation request, wherein a physical resource of a memory of the first virtual machine is a first physical storage space in a first storage node; and
running the target container in the first virtual machine.

2. The method according to claim 1, wherein the first node accesses the first physical storage space via remote direct memory access RDMA.

3. The method according to claim 1 or 2, wherein the first physical storage space is a persistent memory medium.

4. The method according to any one of claims 1 to 3, wherein before the creating the first virtual machine based on the first creation request, the method further comprises:
determining a memory size of the first virtual machine based on the first creation request;
applying to the first storage node for the first physical storage space based on the memory size of the first virtual machine, wherein the first physical storage space is greater than or equal to the memory size of the first virtual machine; and
determining the first physical storage space as the physical resource of the memory of the first virtual machine.

5. The method according to claim 4, wherein the method further comprises:
determining a second physical storage space of a data processing unit DPU in the first node as a physical resource of a cache of the first virtual machine; and
indicating the DPU to establish a mapping relationship between the second physical storage space and the first physical storage space, wherein the DPU is configured to access the first physical storage space via the RDMA, and is configured to write data in the second physical storage space into the first physical storage space.

6. The method according to claim 5, wherein the DPU is further configured to read hot data of the target container from the first physical storage space.

7. The method according to any one of claims 1 to 6, wherein the first node is any node in a container cluster, and the container cluster further comprises a second node; and when the target container is migrated to the second node, a physical resource of a memory of a second virtual machine in which the target container runs and that is on the second node is the first physical storage space.

8. The method according to any one of claims 1 to 6, wherein the first node is any node in a container cluster, the container cluster further comprises a third node, the third node is configured to create a backup container of the target container, a third virtual machine in which the backup container runs and that is on the third node is in a pause state, and a physical resource of a memory of the third virtual machine is the first physical storage space.

9. The method according to claim 8, wherein when the first virtual machine is in a fault state or in a pause state, the third virtual machine is in a running state.

10. The method according to any one of claims 1 to 9, wherein the method further comprises:
after the target container is migrated to another node in the container cluster, updating network routing information for accessing the target container.

11. The method according to any one of claims 1 to 10, wherein the method further comprises:
after the target container is migrated to the another node in the container cluster, sending a routing update message to the another node in the container cluster, to enable the another node to update the network routing information for accessing the target container.

12. A method for creating a container, applied to a second node, wherein the method comprises:
receiving a container migration request, wherein the container migration request indicates to migrate, to the second node, a target container that runs in a first virtual machine on a first node, and indicates the second node to create a second virtual machine for running the target container, wherein the target container is a secure container;
determining a first physical storage space in a first storage node as a physical resource of a memory of the second virtual machine, wherein the first physical storage space is a physical resource of a memory of the first virtual machine;
creating the second virtual machine based on the physical resource of the memory of the second virtual machine; and
running the target container in the second virtual machine.

13. The method according to claim 12, wherein the container migration request comprises an identity ID of the target container, and the determining a first physical storage space in a first storage node as a physical resource of a memory of the second virtual machine comprises:
sending a memory request message to the first storage node, wherein the memory request message comprises the ID of the target container, and the memory request message is used to request to obtain an address of the first physical storage space that has a correspondence with the ID of the target container;
receiving the address of the first physical storage space that is returned by the first storage node; and
determining the first physical storage space indicated by the address as the physical resource of the memory of the second virtual machine.

14. The method according to claim 12, wherein the container migration request comprises an identity ID of the first virtual machine, and the determining a first physical storage space in a first storage node as a physical resource of a memory of the second virtual machine comprises:
sending a memory request message to the first storage node, wherein the memory request message comprises the ID of the first virtual machine, and the memory request message is used to request to obtain an address of the first physical storage space that has a correspondence with the ID of the first virtual machine;
receiving the address of the first physical storage space that is returned by the first storage node; and
determining the first physical storage space indicated by the address as the physical resource of the memory of the second virtual machine.

15. An apparatus for creating a container, used in a first node, wherein the apparatus comprises:
an obtaining unit, configured to obtain a first creation request that indicates to create a target container, wherein the target container is a secure container, and the first creation request comprises a resource parameter of a first virtual machine in which the target container runs; and
a processing unit, configured to: create the first virtual machine based on the first creation request, wherein a physical resource of a memory of the first virtual machine is a first physical storage space in a first storage node; and run the target container in the first virtual machine.

16. The apparatus according to claim 15, wherein the first node accesses the first physical storage space via remote direct memory access RDMA.

17. The apparatus according to claim 15 or 16, wherein the first physical storage space is a persistent memory medium.

18. The apparatus according to any one of claims 15 to 17, wherein before creating the first virtual machine based on the first creation request, the processing unit is further configured to:
determine a memory size of the first virtual machine based on the first creation request;
apply to the first storage node for the first physical storage space based on the memory size of the first virtual machine, wherein the first physical storage space is greater than or equal to the memory size of the first virtual machine; and
determine the first physical storage space as the physical resource of the memory of the first virtual machine.

19. The apparatus according to claim 18, wherein the processing unit is further configured to:
determine a second physical storage space of a data processing unit DPU in the first node as a physical resource of a cache of the first virtual machine; and
indicate the DPU to establish a mapping relationship between the second physical storage space and the first physical storage space, wherein the DPU is configured to access the first physical storage space via the RDMA, and is configured to write data in the second physical storage space into the first physical storage space.

20. The apparatus according to claim 19, wherein the DPU is further configured to read hot data of the target container from the first physical storage space.

21. The apparatus according to any one of claims 15 to 20, wherein the first node is any node in a container cluster, and the container cluster further comprises a second node; and when the target container is migrated to the second node, a physical resource of a memory of a second virtual machine in which the target container runs and that is on the second node is the first physical storage space.

22. The apparatus according to any one of claims 15 to 20, wherein the first node is any node in a container cluster, the container cluster further comprises a third node, the third node is configured to create a backup container of the target container, a third virtual machine in which the backup container runs and that is on the third node is in a pause state, and a physical resource of a memory of the third virtual machine is the first physical storage space.

23. The apparatus according to claim 22, wherein when the first virtual machine is in a fault state or in a pause state, the third virtual machine is in a running state.

24. The apparatus according to any one of claims 15 to 23, wherein
the processing unit is further configured to: after the target container is migrated to another node in the container cluster, update network routing information for accessing the target container.

25. The apparatus according to any one of claims 15 to 24, wherein the apparatus further comprises:
a sending unit, configured to: after the target container is migrated to the another node in the container cluster, send a routing update message to the another node in the container cluster, to enable the another node to update the network routing information for accessing the target container.

26. An apparatus for creating a container, used in a second node, wherein the apparatus comprises:
a receiving unit, configured to receive a container migration request, wherein the container migration request indicates to migrate, to the second node, a target container that runs in a first virtual machine on a first node, and indicates the second node to create a second virtual machine for running the target container, wherein the target container is a secure container; and
a processing unit, configured to: determine a first physical storage space in a first storage node as a physical resource of a memory of the second virtual machine; create the second virtual machine based on the physical resource of the memory of the second virtual machine; and run the target container in the second virtual machine, wherein the first physical storage space is a physical resource of a memory of the first virtual machine.

27. The apparatus according to claim 26, wherein the container migration request comprises an identity ID of the target container, and the apparatus further comprises:
a sending unit, configured to send a memory request message to the first storage node, wherein the memory request message comprises the ID of the target container, and the memory request message is used to request to obtain an address of the first physical storage space that has a correspondence with the ID of the target container, wherein
the receiving unit is further configured to receive the address of the first physical storage space that is returned by the first storage node; and
the processing unit is specifically configured to determine the first physical storage space indicated by the address as the physical resource of the memory of the second virtual machine.

28. The apparatus according to claim 26, wherein the container migration request comprises an identity ID of the first virtual machine, and the apparatus further comprises:
a sending unit, configured to send a memory request message to the first storage node, wherein the memory request message comprises the ID of the first virtual machine, and the memory request message is used to request to obtain an address of the first physical storage space that has a correspondence with the ID of the first virtual machine, wherein
the receiving unit is configured to receive the address of the first physical storage space that is returned by the first storage node; and
the processing unit is specifically configured to determine the first physical storage space indicated by the address as the physical resource of the memory of the second virtual machine.

29. An apparatus for creating a container, comprising a memory, a network interface, and one or more processors, wherein the one or more processors receive or send data through the network interface, and the one or more processors are configured to read program instructions stored in the memory, to perform the method according to any one of claims 1 to 11 or 12 to 14.

30. A container cluster, wherein the container cluster comprises a first node and a second node, wherein
the first node is configured to perform the method according to any one of claims 1 to 11, to create a target container; and
the second node is configured to perform the method according to any one of claims 12 to 14, to migrate the target container running on the first node to the second node.

31. A computer-readable storage medium, wherein the computer-readable storage medium comprises program instructions; and when the program instructions are run on a computer or a processor, the computer or the processor is enabled to perform the method according to any one of claims 1 to 11 or claims 12 to 14.
